# EUROPEAN PATENT SPECIFICATION

(11) **EP 3 702 421 B1**
(45) Date of publication and mention of the grant of the patent: **18.10.2023**
(21) Application number: 20159558.4
(22) Date of filing: 26.02.2020
(51) Int. Cl.: C09D 11/30

(54) **INK-JET INK COMPOSITION AND INK JET RECORDING METHOD**
TINTENSTRAHLTINTENZUSAMMENSETZUNG UND TINTENSTRAHLAUFZEICHNUNGSVERFAHREN
COMPOSITION D'ENCRE À JET D'ENCRE ET PROCÉDÉ D'ENREGISTREMENT À JET D'ENCRE

(30) Priority: 26.02.2019 JP 2019032456
(43) Date of publication of application: 02.09.2020
(73) Proprietor: Seiko Epson Corporation, Tokyo 160-8801 (JP)
(72) Inventor: CHIDATE, Kosuke, Suwa-shi, Nagano 392-8502 (JP)
(74) Representative: Lewis Silkin LLP

(56) References cited:
- EP-A1- 3 382 093
- EP-A2- 2 727 969

## Description

### BACKGROUND

### 1. Technical Field

The present disclosure relates to an ink-jet ink composition and an ink jet recording method.

### 2. Related Art

An ink-jet ink composition containing pigment as a colorant is used in an ink jet recording method because chromogenic properties of an image are good. Examples of inkjet recording inks can be seen in EP 2 727 969 and EP 3 382 093. The following technique is known: a technique in which the fastness and chromogenic properties of an image are good when an ink-jet ink composition contains specific resin particles (for example, JP-A-2018-53171).

In an ink jet recording method using an ink-jet ink composition containing pigment and resin particles, the enhancement of discharge stability during recording and intermittent discharge characteristics and good friction fastness are required.

### SUMMARY

According to an aspect of the present disclosure, an ink-jet ink composition contains pigment, resin particles, a lubricant, water, and an organic solvent. The resin particles are urethane resin particles having a crosslinking group. The lubricant has a mean particle size D50 of 200 nm or less.

According to an aspect of the present disclosure, an inkjet recording method includes an ink-applying step of applying an ink-jet ink composition to a recording medium by discharging the ink-jet ink composition from a nozzle of an ink jet head. The ink-jet ink composition contains pigment, resin particles, a lubricant, water, and an organic solvent. The resin particles are urethane resin particles having a crosslinking group. The lubricant has a mean particle size D50 of 200 nm or less.

### BRIEF DESCRIPTION OF THE DRAWINGS

FIG. 1 is a schematic perspective view of an ink jet recording apparatus performing an ink jet recording method according to an embodiment of the present disclosure.
FIG. 2 is a sectional view of an ink jet head included in the ink jet recording apparatus shown in FIG. 1.
FIG. 3 is a sectional view of the vicinity of a circulation liquid chamber in the ink jet head shown in FIG. 2.

### DESCRIPTION OF EXEMPLARY EMBODIMENTS

Some embodiments of the present disclosure are described below. The embodiments below illustrate examples of the present disclosure. The present disclosure is not in any way limited to the embodiments below and includes various modifications made without departing from the gist of the present disclosure. All of components described below are not necessarily components essential for the present disclosure.

An example of an ink-jet ink composition according to an embodiment of the present disclosure is an ink-jet ink composition containing pigment, resin particles, a lubricant, water, and an organic solvent. The resin particles are urethane resin particles having a crosslinking group. The lubricant has a mean particle size D50 of 200 nm or less.

An example of an inkjet recording method according to an embodiment of the present disclosure includes an ink-applying step of applying an ink-jet ink composition to a recording medium by discharging the ink-jet ink composition from a nozzle of an inkjet head. The ink-jet ink composition contains pigment, resin particles, a lubricant, water, and an organic solvent. The resin particles are urethane resin particles having a crosslinking group. The lubricant has a mean particle size D50 of 200 nm or less.

The ink-jet ink composition and ink jet recording method according to this embodiment are described below in the order of an ink jet recording apparatus usable in this embodiment, the ink-jet ink composition (hereinafter also referred to as the "ink composition" or "ink"), the recording medium, and the inkjet recording method.

### 1. Ink Jet Recording Apparatus

The inkjet recording apparatus usable in this embodiment is described using an example of an ink jet recording apparatus including a recording head that is an ink jet head using the ink jet recording method.

An ink jet recording apparatus used in this embodiment is described using an on-carriage type of printer including a carriage and an ink cartridge mounted thereon as an example. In this example, the inkjet recording apparatus is not limited to the on-carriage type of printer and may be an off-carriage type of printer including an ink cartridge fixed to the outside.

A printer used for description below is a serial printer including a carriage moving in predetermined directions and a recording inkjet head which is mounted on the carriage and which moves with the movement of the carriage to discharge droplets onto a recording medium. An inkjet recording apparatus used in the present disclosure is not limited to the serial printer and may be a line printer. The line printer is a type of printer including an ink jet head which is wider than the width of a recording medium and which discharges droplets onto a recording medium without moving.

An example of the ink jet recording apparatus used in this embodiment is described below with reference to drawings. The ink jet recording apparatus used in this embodiment is not limited to a mode below. In drawings used in description below, members are appropriately rescaled for the purpose of showing the members in a recognizable size.

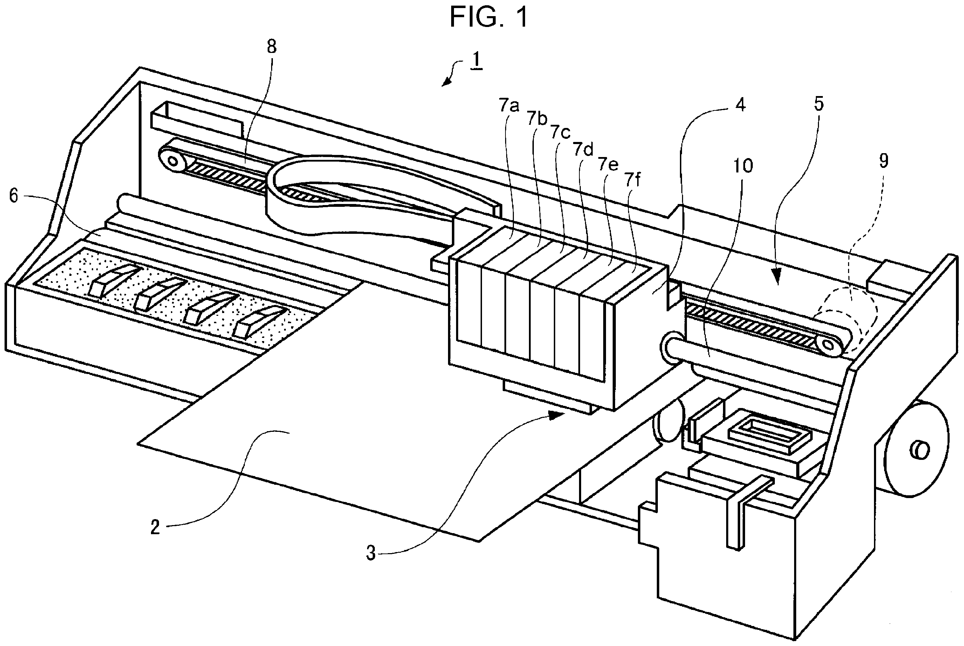

An ink jet recording apparatus is an apparatus that performs recording in such a manner that droplets are landed on a recording medium using an inkjet head serving as an ink discharge section discharging fine droplets of an ink composition. FIG. 1 is a schematic perspective view of the ink jet recording apparatus used in this embodiment.

As shown in FIG. 1, in this embodiment, a printer 1 includes an inkjet head 3, a carriage 4, a main scanning mechanism 5, a platen roller 6, and a control section (not shown) controlling the operation of the whole printer 1. The carriage 4 has the feed section 3 mounted thereon and also has ink cartridges 7a, 7b, 7c, 7d, 7e, and 7f detachably attached thereto. The ink cartridges 7a, 7b, 7c, 7d, 7e, and 7f store ink compositions supplied to the ink jet head 3.

The main scanning mechanism 5 includes a timing belt 8 connected to the carriage 4, a motor 9 driving the timing belt 8, and a guide shaft 10. The guide shaft 10 serves as a support member for the carriage 4 and extends in a scanning direction of the carriage 4, that is, a main scanning direction. The carriage 4 is driven by the motor 9 with the timing belt 8 therebetween and can reciprocate along the guide shaft 10. This allows the main scanning mechanism 5 to have the function of reciprocating the carriage 4 in the main scanning direction.

The platen roller 6 has the function of transporting a recording medium 2 in a sub-scanning direction perpendicular to the main scanning direction, that is, the function of transporting the recording medium 2 in a length direction of the recording medium 2. This allows the recording medium 2 to be transported in the sub-scanning direction. The carriage 4, on which the inkjet head 3 is mounted, can reciprocate in the main scanning direction, which substantially coincides with a width direction of the recording medium 2. The ink jet head 3 is configured so as to be capable of relatively scanning the recording medium 2 in the main scanning direction and the sub-scanning direction.

The ink cartridges 7a, 7b, 7c, 7d, 7e, and 7f are independent six cartridges. The ink cartridges 7a, 7b, 7c, 7d, 7e, and 7f can store ink compositions forming an ink set according to this embodiment. The ink compositions exhibit colors such as black, cyan, magenta, yellow, white, and orange; are separately stored in the ink cartridges 7a, 7b, 7c, 7d, 7e, and 7f; and can be arbitrarily used in combination. Referring to FIG. 1, the number of the ink cartridges 7a, 7b, 7c, 7d, 7e, and 7f is, but is not limited to, six. Bottom portions of the ink cartridges 7a, 7b, 7c, 7d, 7e, and 7f are provided with supply ports (not shown) for supplying the ink compositions stored in the ink cartridges 7a, 7b, 7c, 7d, 7e, and 7f to the ink jet head 3.

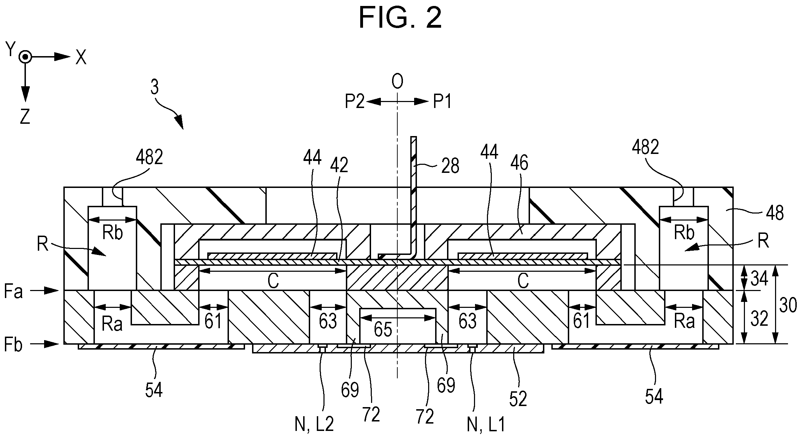

The ink jet head 3 is a means ejecting the ink compositions supplied from the ink cartridges 7a, 7b, 7c, 7d, 7e, and 7f from a plurality of nozzles N under control by the control section (not shown) to apply the ink compositions to the recording medium 2. The ink jet head 3 includes the nozzles N (see FIG. 2), which discharge the ink compositions to apply the ink compositions the recording medium 2, and has a surface that faces the recording medium 2, to which the ink compositions are applied, and that is provided with the nozzles N. The nozzles N are arranged in lines to form nozzle arrays. The nozzle arrays are individually arranged to correspond to color ink compositions. Each of the color ink compositions is supplied from a corresponding one of the ink cartridges 7a, 7b, 7c, 7d, 7e, and 7f to the ink jet head 3 and is discharged from the nozzles N with actuators (not shown) in the inkjet head 3 in the form of droplets. Droplets of the discharged ink compositions are landed on the recording medium 2, whereby an image, a text, a pattern, a color, or the like is formed in a recording area of the recording medium 2.

In the inkjet head 3, the actuators used serve as driving means and are, but are not limited to, piezoelectric elements. The actuators used may be, for example, electromechanical transducers displacing a diaphragm by electrostatic attraction or electrothermal transducers discharging an ink composition in the form of droplets using bubbles generated by heating.

In this embodiment, the inkjet head 3 is a head including pressure chambers C (see FIG. 2) and circulation paths circulating the ink-jet ink compositions in the pressure chambers C. Since the ink jet head 3 includes the circulation paths, the ink compositions in the pressure chambers C or the nozzles N (see FIG. 2) are refreshed. This reduces the clogging of the nozzles N even when the concentration of the urethane resin particles in ink below is high because water or the organic solvent in the ink evaporates, thereby enabling discharge stability and intermittent discharge characteristics to be maintained good.

In this embodiment, the nozzle diameter is preferably 20 µm to 30 µm and more preferably 22 µm to 28 µm. When the nozzle diameter is 20 µm or more, the ink can be discharged without impairing the disorder of the ink in a channel and intermittent discharge characteristics are good. Furthermore, since the ink jet head 3, which includes the circulation paths, is used, intermittent discharge characteristics are good. When the nozzle diameter is 30 µm or less, the area of the surface of the ink is adequate and the drying of the ink is unlikely to proceed; hence, the discharge thereof is stable. The term "nozzle diameter" as used herein refers to the inside diameter (that is, the inside diameter d1) of a nozzle formed in a surface of a nozzle plate.

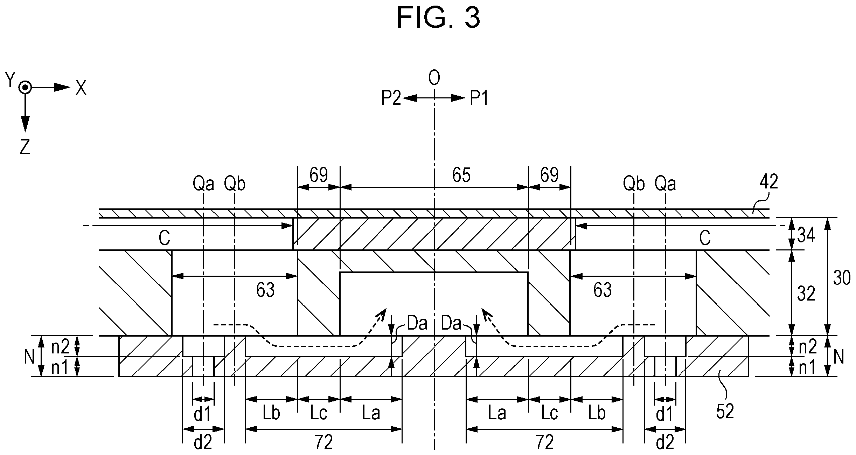

FIG. 2 is a sectional view of the ink jet head 3 in a cross-section perpendicular to a Y-direction. FIG. 3 is a partly exploded perspective view of the ink jet head 3. In FIG. 2, for example, a plane parallel to a surface of the recording medium 2 is denoted as an X-Y plane and a direction perpendicular to the X-Y plane is hereinafter denoted as a Z-direction. The direction in which the ink is ejected from the ink jet head 3 corresponds to the Z-direction. The main scanning direction corresponds to the X-direction. A direction (the sub-scanning direction) perpendicular to the main scanning direction corresponds to the Y-direction.

In the inkjet head 3, the nozzles N are arranged in the Y-direction to form the nozzle arrays. In the inkjet head 3, a plane through which a central axis parallel to the Y-direction extends and which is parallel to the Z-direction, that is, a Y-Z plane O is denoted as a "central plane" in description below.

As shown in FIG. 2, the inkjet head 3 has a structure in which elements associated with the nozzles N in a first line L1 are arranged plane-symmetrically to elements associated with the nozzles N in a second line L2 with the central plane O therebetween. That is, in the ink jet head 3, a positive-side section (hereinafter also referred to as the "first section") P1 in the X-direction and a negative-side section (hereinafter also referred to as the "second section") P2 in the X-direction are substantially common in structure to each other with the central plane O therebetween. The nozzles N in the first line L1 are placed in the first section P1. The nozzles N in the second line L2 are placed in the second section P2. The central plane O corresponds to the interface between the first section P1 and the second section P2.

As shown in FIG. 2, the inkjet head 3 includes a channel-forming section 30. The channel-forming section 30 is a structural body forming channels for supplying the ink to the nozzles N. In this embodiment, the channel-forming section 30 is composed of a stack of a first channeled substrate 32 and a second channeled substrate 34. Each of the first channeled substrate 32 and the second channeled substrate 34 is a plate-shaped member elongated in the Y-direction. The second channeled substrate 34 is placed on a surface Fa of the first channeled substrate 32 that is on the negative side in the Z-direction using, for example, an adhesive.

As shown in FIG. 2, a vibration section 42, a plurality of piezoelectric elements 44, a protective member 46, and a housing section 48 are placed on the surface Fa of the first channeled substrate 32 in addition to the second channeled substrate 34. On the other hand, a nozzle plate 52 and vibration absorbers 54 are placed on a surface Fb of the first channeled substrate 32 that is on the positive side in the Z-direction, that is, the side opposite to the surface Fa. Components of the ink jet head 3 are schematically plate-shaped members elongated in the Y-direction similarly to the first channeled substrate 32 and the second channeled substrate 34 and are joined to each other using, for example, an adhesive. The direction in which the first channeled substrate 32 and the second channeled substrate 34 are stacked, the direction in which the first channeled substrate 32 and the nozzle plate 52 are stacked, or a direction perpendicular to a surface of each plate-shaped element can be grasped as the Z-direction.

The nozzle plate 52 is a plate-shaped member provided with the nozzles N and is placed on the surface Fb of the first channeled substrate 32 using, for example, an adhesive. Each of the nozzles N is a circular through-hole allowing the ink to pass through. In this embodiment, the nozzles N forming the first line L1 and the nozzles N forming the second line L2 are formed in the nozzle plate 52. In particular, the nozzles N in the first line L1 are placed in a region of the nozzle plate 52 that is on the positive side in the X-direction when viewed from the central plane O such that the nozzles N in the first line L1 are arranged in the Y-direction. The nozzles N in the second line L2 are placed in a region of the nozzle plate 52 that is on the negative side in the X-direction such that the nozzles N in the second line L2 are arranged in the Y-direction. The nozzle plate 52 is a single plate-shaped member continuing over a portion provided with the nozzles N in the first line L1 and a portion provided with the nozzles N in the second line L2. The nozzle plate 52 is manufactured in such a manner that a silicon monocrystalline substrate is processed using, for example, a semiconductor-manufacturing technique such as a processing technique including dry etching and wet etching. Incidentally, known materials and manufacturing methods can be used to manufacture the nozzle plate 52.

As shown in FIG. 2, the first channeled substrate 32 is such that a space Ra, a plurality of supply paths 61, and a plurality of communication paths 63 are placed in each of the first section P1 and the second section P2. The space Ra is an opening elongated in the Y-direction in plan view, that is, when viewed in the Z-direction. The supply paths 61 and the communication paths 63 are through-holes placed for each of the nozzles N. The communication paths 63 are arranged in the Y-direction in plan view. The supply paths 61 are arranged between an array of the communication paths 63 and the space Ra in the Y-direction. The supply paths 61 commonly communicate with the space Ra. An arbitrary one of the communication paths 63 overlaps one of the nozzles N that corresponds to this communication path 63 in plan view. In particular, an arbitrary one of the communication paths 63 of the first section P1 communicates with one of the nozzles N in the first line L1 that corresponds to this communication path 63. Likewise, an arbitrary one of the communication paths 63 of the second section P2 communicates with one of the nozzles N in the second line L2 that corresponds to this communication path 63.

As shown in FIG. 2, the second channeled substrate 34 is such a plate-shaped member that the pressure chambers C are placed in each of the first section P1 and the second section P2. The pressure chambers C are arranged in the Y-direction. Each of the pressure chambers C is placed for a corresponding one of the nozzles N and is a space elongated in the X-direction. The first channeled substrate 32 and the second channeled substrate 34, as well as the nozzle plate 52, are manufactured in such a manner that a silicon monocrystalline substrate is processed using, for example, a semiconductor-manufacturing technique. Incidentally, known materials and manufacturing methods can be used to manufacture the first channeled substrate 32 and the second channeled substrate 34. As described above, in this embodiment, the channel-forming section 30 and the nozzle plate 52 include substrates made of silicon. Thus, there is an advantage in that fine channels can be accurately formed in the channel-forming section 30 and the nozzle plate 52 using, for example, such a semiconductor-manufacturing technique as exemplified above.

As shown in FIG. 2, the vibration section 42 is placed on a surface of the second channeled substrate 34 that is opposite to the first channeled substrate 32. In this embodiment, the vibration section 42 is a plate-shaped member that can vibrate elastically. The second channeled substrate 34 and the vibration section 42 can be formed together by selectively removing through-thickness portions from regions of a plate-shaped member with a predetermined thickness, the regions corresponding to the pressure chambers C.

As shown in FIG. 2, the surface Fa of the first channeled substrate 32 and the vibration section 42 face each other with a distance therebetween inside each pressure chamber C. The pressure chamber C is a space located between the surface Fa of the first channeled substrate 32 and the vibration section 42 and generates a pressure change in the ink filled in the space. The pressure chambers C are, for example, spaces of which a longitudinal direction is the X-direction and are individually placed for each of the nozzles N. In each of the first line L1 and the second line L2, the pressure chambers C are arranged in the Y-direction. As shown in FIG. 2, an end portion of an arbitrary one of the pressure chambers C overlaps a corresponding one of the communication paths 63 in plan view, the end portion being located on the central plane O side, and an end portion located opposite to the central plane O overlaps a corresponding one of the supply paths 61. Thus, in each of the first section P1 and the second section P2, the pressure chambers C communicate with the nozzles N with the communication paths 63 therebetween and also communicate with the spaces Ra with the supply paths 61 therebetween. Incidentally, predetermined flow resistance can be added to each pressure chamber C in such a manner that a throttling channel with a reduced width is formed in the pressure chamber C.

As shown in FIG. 2, the piezoelectric elements 44 are placed on a surface of the vibration section 42 that is opposite to the pressure chambers C so as to correspond to the different nozzles N in each of the first section P1 and the second section P2. The piezoelectric elements 44 are passive elements deformed by the supply of a driving signal. The piezoelectric elements 44 are arranged in the Y-direction so as to correspond to the pressure chambers C. An arbitrary one of the piezoelectric elements 44 is, for example, a stack including two electrodes facing each other and a piezoelectric layer interposed therebetween. Incidentally, portions deformed by the supply of a driving signal, that is, active portions vibrating the vibration section 42 can be defined as the piezoelectric elements 44. In this embodiment, when the vibration section 42 vibrates in synchronization with the deformation of the piezoelectric elements 44, the pressure in the pressure chambers C varies, whereby the ink filled in the pressure chambers C is ejected through the communication paths 63 and the nozzles N.

As shown in FIG. 2, the protective member 46 is a plate-shaped member for protecting the piezoelectric elements 44 and is placed on a surface of the vibration section 42 or a surface of the second channeled substrate 34. Material forming the protective member 46 and a method for manufacturing the protective member 46 are arbitrary. The protective member 46, as well as the first channeled substrate 32 and the second channeled substrate 34, can be formed by processing, for example, a silicon monocrystalline substrate by a semiconductor-manufacturing technique. The piezoelectric elements 44 are housed in recessed portions formed in a surface of the protective member 46 that is on the vibration section 42 side.

An end portion of a wiring board 28 is joined to a surface of the vibration section 42 that is opposite to the channel-forming section 30 or a surface of the channel-forming section 30. The wiring board 28 is a flexible mounted component provided with a plurality of wiring lines (not shown) electrically connecting the ink jet head 3 to a control unit 20. An end portion of the wiring board 28 that extends through an opening portion formed in the protective member 46 and an opening portion formed in the housing section 48 to the outside is connected to the control unit 20. The wiring board 28 used is preferably, for example, a flexible component such as a flexible printed circuit (FPC) or a flexible flat cable (FFC).

The housing section 48 is a case for storing the ink supplied to the pressure chambers C and the nozzles N. A surface of the housing section 48 that is on the positive side in the Z-direction is joined to the surface Fa of the first channeled substrate 32 with, for example, an adhesive. A known technique or manufacturing method can be used to manufacture the housing section 48. The housing section 48 can be formed by, for example, the injection molding of a resin material.

As shown in FIG. 2, the housing section 48 is provided with spaces Rb each of which is placed in a corresponding one of the first section P1 and the second section P2. The space Rb in the housing section 48 communicates with the space Ra in the first channeled substrate 32. Cavities composed of the spaces Ra and the spaces Rb function as liquid storage chambers R storing the ink supplied to the pressure chambers C. The liquid storage chambers R are common liquid chambers common to the nozzles N. Each of the liquid storage chambers R is placed in a corresponding one of the first section P1 and the second section P2. The liquid storage chamber R in the first section P1 is located on the positive side in the X-direction when viewed from the central plane O. The liquid storage chamber R in the second section P2 is located on the negative side in the X-direction when viewed from the central plane O. A surface of the housing section 48 that is opposite to the first channeled substrate 32 is provided with inlets 482 for introducing the ink, supplied from a liquid container 14, into the liquid storage chambers R.

The vibration absorbers 54 are placed on the surface Fb of the first channeled substrate 32 for each of the first section P1 and the second section P2. The vibration absorbers 54 are flexible films absorbing the change in pressure of the ink in the liquid storage chambers R, that is, compliance substrates. For example, the vibration absorbers 54 are placed on the surface Fb of the first channeled substrate 32 so as to block the spaces Ra and supply paths 61 in the first channeled substrate 32. Each of the vibration absorbers 54 forms a wall of a corresponding one of the liquid storage chambers R, particularly the bottom thereof.

The surface Fb of the first channeled substrate 32 that faces the nozzle plate 52 is provided with a space (hereinafter referred to as the "circulation liquid chamber") 65. In this embodiment, the circulation liquid chamber 65 is an elongated bottomed hole extending in the Y-direction in plan view. An opening of the circulation liquid chamber 65 is blocked with the nozzle plate 52, which is joined to the surface Fb of the first channeled substrate 32. The circulation liquid chamber 65 continues over the nozzles N along, for example, the first line L1 and the second line L2. In particular, the circulation liquid chamber 65 is placed between an array of the nozzles N in the first line L1 and an array of the nozzles N in the second line L2. Thus, the circulation liquid chamber 65 is located between the communication path 63 in the first section P1 and the communication path 63 in the second section P2. As described above, the channel-forming section 30 is a structural body provided with the pressure chamber C in the first section P1, the communication path 63 in the first section P1, the pressure chamber C in the second section P2, the communication path 63 in the second section P2, and the circulation liquid chamber 65, which is located between the communication path 63 in the first section P1 and the communication path 63 in the second section P2. As shown in FIG. 2, the channel-forming section 30 includes wall-shaped portions (hereinafter referred to as the "separator portions 69") separating the circulation liquid chamber 65 from the communication paths 63.

As described above, in each of the first section P1 and the second section P2, the pressure chambers C and the piezoelectric elements 44 are arranged in the Y-direction. Thus, in other words, it can be said that the circulation liquid chamber 65 extends in the Y-direction so as to continue over the pressure chambers C or the piezoelectric elements 44 in each of the first section P1 and the second section P2. Alternatively, it can be said that the circulation liquid chamber 65 and the liquid storage chambers R extend in the Y-direction with a distance therebetween and the pressure chambers C, the communication paths 63, and the nozzles N are located in the distance as shown in FIG. 2.

FIG. 3 is an enlarged sectional view of the vicinity of the circulation liquid chamber 65 in the ink jet head 3. As shown in FIG. 3, in this embodiment, each of the nozzles N includes a first zone n1 and a second zone n2. The first zone n1 and the second zone n2 are circular spaces, coaxially formed, communicating with each other. The second zone n2 is located on the channel-forming section 30 side when viewed from the first zone n1. In this embodiment, the central axis Qa of each nozzle N is located opposite to the circulation liquid chamber 65 when viewed from the central axis Qb of a corresponding one of the communication paths 63. The inside diameter d2 of the second zone n2 is larger than the inside diameter d1 of the first zone n1. According to a configuration in which the nozzles N are step-shaped as described above, there is an advantage in that the flow resistance of each nozzle N is readily set to a desired characteristic.

As shown in FIG. 3, a surface of the nozzle plate 52 that faces the channel-forming section 30 is provided with a plurality of discharge paths 72 such that the discharge paths 72 are located in each of the first section P1 and the second section P2. The discharge paths 72 in the first section P1 correspond to the nozzles N in the first line L1 or the communication paths 63 corresponding to the first line L1 in a one-to-one manner. The discharge paths 72 in the second section P2 correspond to the nozzles N in the second line L2 or the communication paths 63 corresponding to the second line L2 in a one-to-one manner.

Each discharge path 72 is a groove extending in the X-direction, that is, an elongated bottomed hole and functions as a channel allowing the ink to flow therethrough. In this embodiment, the discharge paths 72 are placed at positions apart from the nozzles N, particularly on the circulation liquid chamber 65 side when viewed from the nozzles N corresponding to the discharge paths 72. The nozzles N, particularly the second zones n2, and the discharge paths 72 are collectively formed in a common step by, for example, a semiconductor-manufacturing technique such as a processing technique including dry etching and wet etching.

The discharge paths 72 are linearly formed so as to have substantially the same channel width Wa as the inside diameter d2 of the second zones n2 of the nozzles N. In this embodiment, the channel width Wa of the discharge paths 72 is smaller than the channel width Wb of the pressure chambers C. Thus, the flow resistance of the discharge paths 72 can be increased as compared to a configuration in which the channel width Wa of the discharge paths 72 is larger than the channel width Wb of the pressure chambers C. On the other hand, the depth Da of the discharge paths 72 with respect to a surface of the nozzle plate 52 is constant over the entire length thereof. In particular, the discharge paths 72 are formed so as to have substantially the same depth as that of the second zones n2 of the nozzles N. According to the above configuration, there is an advantage in that the discharge paths 72 and the second zones n2 are more readily formed as compared to a configuration in which the discharge paths 72 and the second zones n2 are formed so as to have different depths. Incidentally, the "depth" of a channel means the depth of the channel in the Z-direction, for example, the difference in height between the top and bottom of the channel.

An arbitrary one of the discharge paths 72 in the first section P1 is located on the circulation liquid chamber 65 side when viewed from the nozzle N in the first line L1 that corresponds to this discharge path 72. An arbitrary one of the discharge paths 72 in the second section P2 is located on the circulation liquid chamber 65 side when viewed from the nozzle N in the second line L2 that corresponds to this discharge path 72. In addition, the side of each discharge path 72 that is opposite to the central plane O overlaps one of the communication paths 63 that corresponds to the discharge path 72 in plan view. That is, the discharge paths 72 communicate with the communication paths 63. On the other hand, an end portion of each discharge path 72 that is on the central plane O side overlaps the circulation liquid chamber 65 in plan view. That is, the discharge paths 72 communicate with the circulation liquid chamber 65. As described above, each of the communication paths 63 communicates with the circulation liquid chamber 65 with a corresponding one of the discharge paths 72 therebetween. Thus, as indicated by a dashed arrow in FIG. 3, the ink in each communication path 63 is supplied to the circulation liquid chamber 65 through a corresponding one of the discharge paths 72. That is, in this embodiment, the communication paths 63 corresponding to the first line L1 and the communication paths 63 corresponding to the second line L2 commonly communicate with the single circulation liquid chamber 65.

FIG. 3 shows the channel length La of a portion of an arbitrary one of the discharge paths 72 that overlaps the circulation liquid chamber 65; the channel length Lb of portions of the discharge paths 72 that overlap the communication paths 63, that is, the size in the X-direction; and the channel length Lc of portions of the discharge paths 72 that overlap the separator portions 69 of the channel-forming section 30, that is, the size in the X-direction. The channel length Lc corresponds to the thickness of the separator portions 69. The separator portions 69 function as throttling portions of the discharge paths 72. Thus, as the channel length Lc, which corresponds to the thickness of the separator portions 69, is larger, the flow resistance of the discharge paths 72 is larger. In this embodiment, the following relationship holds: a relationship that the channel length La is larger than the channel length Lb and the channel length La is larger than the channel length Lc. Furthermore, in this embodiment, the following relationship holds: a relationship that the channel length Lb is larger than the channel length Lc. The above configuration has an advantage that the ink is more likely to flow into the circulation liquid chamber 65 from the communication paths 63 through the discharge paths 72 as compared to a configuration in which the channel length La and the channel length La are larger than the channel length Lc.

As described above, in the ink jet head 3, the pressure chambers C indirectly communicate with the circulation liquid chamber 65 with the communication paths 63 and the circulation liquid chamber 65 therebetween. That is, the pressure chambers C do not directly communicate with the circulation liquid chamber 65. In the above configuration, when the pressure in the pressure chambers C varies due to the operation of the piezoelectric elements 44, portions of the ink flowing in the communication paths 63 are ejected from the nozzles N toward the outside and the remainder thereof flow into the circulation liquid chamber 65 from the communication paths 63 through the discharge paths 72. The inertance of each of the communication paths 63, the nozzles N, and the discharge paths 72 is selected such that the ejection rate of the ink, ejected from the nozzles N, flowing through the communication paths 63 by means of the driving of the piezoelectric elements 44 once exceeds the circulation rate of the ink, flowing into the circulation liquid chamber 65 through the discharge paths 72, flowing through the communication paths 63. Supposing that all the piezoelectric elements 44 are driven at the same time, it can be said that the sum of the circulation rates of the ink flowing into the circulation liquid chamber 65 from the communication paths 63, for example, the flow rate of the ink per unit time in the circulation liquid chamber 65 is larger than the sum of the ejection rates of the ink from the nozzles N.

In particular, the flow resistance of each of the communication paths 63 and the discharge paths 72 is determined such that the percentage of the circulation rate of the ink flowing through the communication paths 63 is 70% or more, that is, the percentage of the ejection rate of the ink is 30% or less. According to the above configuration, the ink in the vicinity of the nozzles N can be effectively circulated into the circulation liquid chamber 65 in such a manner that the ejection rate of the ink is ensured. Roughly speaking, as the flow resistance of the discharge paths 72 is larger, the circulation rate tends to be smaller and the ejection rate tends to be larger. As the flow resistance of the discharge paths 72 is smaller, the circulation rate tends to be larger and the ejection rate tends to be smaller.

The printer 1 is configured to include, for example, a circulation mechanism (not shown). The circulation mechanism is one for supplying the ink in the circulation liquid chamber 65 to the liquid storage chambers R, that is, one for circulating the ink. The circulation mechanism is configured to include, for example, a suction unit sucking the ink from the circulation liquid chamber 65, a pump, a filtering unit (not shown) capturing bubbles and contaminants present in the ink, and a heating unit reducing the thickening of the ink by heating. The ink from which the bubbles and the contaminants are removed with the circulation mechanism and of which the thickening is reduced is supplied to the liquid storage chambers R from the circulation mechanism through the inlets 482. This allows the ink to circulate through a route that starts from the liquid storage chambers R through the supply paths 61, the pressure chambers C, the communication paths 63, the discharge paths 72, the circulation liquid chamber 65, and the circulation mechanism to the liquid storage chambers R. The supply paths 61 and the discharge paths 72 are collectively referred to as circulation paths.

When the nozzle plate 52 is provided with the discharge paths 72, which communicate with the communication paths 63 and the circulation liquid chamber 65, as described above, the ink in the vicinity of the nozzles N can be efficiently circulated into the circulation liquid chamber 65. Since the communication paths 63 corresponding to the first line L1 and the communication paths 63 corresponding to the second line L2 commonly communicate with the circulation liquid chamber 65 therebetween, there is an advantage in that the configuration of a liquid ejection head 26 is simplified and the downsizing thereof is achieved as compared to a configuration in which a circulation chamber communicating with the discharge paths 72 corresponding to the first line L1 and a circulation chamber communicating with the discharge paths 72 corresponding to the second line L2 are separately placed.

A configuration in which the discharge paths 72 and the nozzles N are connected to each other may be used rather than a configuration in which the discharge paths 72 and the nozzles N are apart from each other. The following configuration may be used: a configuration in which circulation liquid chambers each of which corresponds to a corresponding one of the first section P1 and the second section P2 are placed in addition to the circulation liquid chamber 65.

In this embodiment, the printer 1 is preferably provided with a drying means and a heating means (both not shown). The drying means and the heating means are means for efficiently drying the ink applied to the recording medium 2 in an ink jet recording method below. The drying means and the heating means may be placed at a position capable of drying/heating the recording medium 2. A position where each of the drying means and the heating means is placed is not particularly limited. Referring to FIG. 1, in order to efficiently dry the ink applied to the recording medium 2, the drying means and the heating means may be placed at, for example, a position facing the ink jet head 3.

Examples of the drying means and the heating means include a print heater mechanism heating the recording medium 2 by bringing the recording medium 2 into contact with a heat source, a mechanism applying an infrared ray or a microwave that is an electromagnetic wave having a maximum wavelength at about 2,450 MHz, and a dryer mechanism blowing hot air. The recording medium 2 is heated before or when droplets ejected from the nozzles N of the ink jet head 3 are applied to the recording medium 2. Heating conditions, for example, the timing of heating, the heating temperature, the heating time, and the like are controlled by the control section.

The drying means and the heating means may be placed downstream in the direction in which the recording medium 2 is transported. In this case, after the ink ejected from the nozzles N is applied to the recording medium 2 and an image is thereby formed, the recording medium 2 is heated. This enhances drying properties of the ink applied to the recording medium 2.

Furthermore, in this embodiment, the printer 1 may be configured to include, for example, a treatment solution application means treating the recording medium 2 or an inkjet recording system provided with the treatment solution application means separately from the printer 1 may be used. In this embodiment, the treatment solution application means is not an essential component.

In this embodiment, when the treatment solution application means is placed in the printer 1 and is ink jet application in which ink is ejected from nozzles of an ink head, a treatment solution composition can be uniformly applied to a recording medium. When the treatment solution application means is such inkjet application, a treatment solution can be stored in any one of the ink cartridges 7a, 7b, 7c, 7d, 7e, and 7f shown in FIG. 1. Examples of another treatment solution application means include a dipping means dipping the recording medium in the treatment solution composition, a roller coating the recording medium with the treatment solution composition using a roll coater or the like, and a spray spraying the treatment solution composition using a spray device or the like.

### 2. Ink-Jet Ink Composition

In this embodiment, the ink-jet ink composition according to this embodiment contains the pigment, the resin particles, the lubricant, water, and the organic solvent. The resin particles are urethane resin particles having a crosslinking group. The lubricant has a mean particle size D50 of 200 nm or less.

In the present specification, the ink-jet ink composition is an aqueous ink composition containing water. The term "aqueous ink composition" as used herein refers to an ink composition in which the content of water is 30% by mass or more with respect to the total mass of the ink composition.

In this embodiment, examples of an aqueous ink-jet ink composition containing pigment and resin particles include textile printing ink-jet ink compositions used for ink jet textile printing in which images are recorded on textiles such as woven fabrics, knitted fabrics, and nonwoven fabrics and aqueous ink-jet ink compositions used to make a record on a low ink-absorbing or ink non-absorbing unabsorbent recording medium.

The ink-jet ink composition (hereinafter simply referred to as the "ink composition" or the "ink") according to this embodiment is described below using a textile printing ink-jet ink composition.

### 2.1. Pigment

The pigment has excellent chromogenic properties and rubfastness and is successfully used as a colorant.

The pigment used may be either of a known organic pigment and inorganic pigment. Examples of the organic pigment include azo pigments such as azo lake pigments, insoluble azo pigments, condensed azo pigments, and chelate azo pigments; polycyclic pigments such as phthalocyanine pigments, perylene pigments, perinone pigments, anthraquinone pigments, quinacridone pigments, dioxazine pigments, thioindigo pigments, isoindolinone pigments, isoindoline pigments, quinophthalone pigments, and diketopyrrolopyrrole pigments; dye lake pigments such as basic dye lakes and acidic dye lakes; nitro pigments; nitroso pigments; aniline black; and daylight fluorescent pigments. Examples of the inorganic pigment include metal oxide pigments such as titanium dioxide, zinc oxide, and chromium oxide and carbon black. A glitter pigment such as a pearl pigment or a metallic pigment may be used.

Examples of a black pigment for black ink compositions include C.I. Pigment Blacks 1, 7, and 11. C.I. means "Colour Index Generic Name". Among these, a black pigment used for ink jet textile printing is preferably C.I. Pigment Black 7 which is in a carbon black series, which has relatively low density, and which is unlikely to sink in an aqueous medium.

Examples of pigments other than the black pigment include C.I. Pigment Yellows 1, 3, 12, 13, 14, 17, 24, 34, 35, 37, 42, 53, 55, 74, 81, 83, 95, 97, 98, 100, 101, 104, 108, 109, 110, 117, 120, 138, 153, 155, and 180; C.I. Pigment Reds 1, 2, 3, 5, 17, 22, 23, 31, 38, 48:2 (Permanent Red 2B(Ba)), 48:2 (Permanent Red 2B(Ca)), 48:3, 48:4, 49:1, 52:2, 53:1, 57:1, 60:1, 63:1, 63:2, 64:1, 81, 83, 88, 101, 104, 105, 106, 108, 112, 114, 122, 123, 146, 149, 166, 168, 170, 172, 177, 178, 179, 185, 190, 193, 209, and 219; C.I. Pigment Violets 19 and 23; C.I. Pigment Blues 1, 2, 15, 15:1, 15:2, 15:3, 15:4, 15:6, 16, 17:1, 56, 60, and 63; and C.I. Pigment Greens 1, 4, 7, 8, 10, 17, 18, and 36.

The above-mentioned pigments may be used alone or in combination. The pigment preferably has a mean particle size D50 of 5 µm or less, more preferably 0.3 µm or less, and furthermore preferably 0.01 µm to 0.15 µm. Setting the mean particle size of the pigment to these ranges ensures discharge stability from the inkjet head 3 and enables chromogenic properties of the pigment in a recording to be enhanced.

In this embodiment, examples of a white pigment for white ink compositions include C.I. Pigment White 1, which is basic lead carbonate; C.I. Pigment White 4, which contains zinc oxide; C.I. Pigment White 5, which contains a mixture of zinc sulfide and barium sulfate; C.I. Pigment White 6, which contains titanium dioxide; C.I. Pigment White 6:1, which contains titanium dioxide containing another metal oxide; C.I. Pigment White 7, which contains zinc sulfate; C.I. Pigment White 18, which contains calcium carbonate; C.I. Pigment White 19, which contains clay; C.I. Pigment White 20, which contains titanium dioxide-coated mica; C.I. Pigment White 21, which contains barium sulfate; C.I. Pigment White 22, which contains gypsum; C.I. Pigment White 26, which contains magnesium oxide/silicon dioxide; C.I. Pigment White 27, which contains silicon dioxide; and C.I. Pigment White 28, which contains calcium silicate anhydride). Among these, C.I. Pigment White 6 has excellent chromogenic properties, hiding properties, and the like and is preferably used.

The mean particle size D50 of the white pigment is preferably 100 µm to 500 µm, more preferably 150 µm to 450 µm, and furthermore preferably 200 µm to 400 µm. Setting the average particle size of the white pigment to the ranges enables discharge stability from the ink jet head 3 to be ensured. Furthermore, when the recording medium used is fabric, hiding properties for a color dyed to a fabric textile in advance is enhanced.

The term "mean particle size D50" as used herein refers to a particle size at a cumulative volume of 50% by volume in a volume-based particle size distribution unless otherwise specified. The mean particle size is measured by a dynamic light scattering method or laser diffraction light method specified in JIS Z 8825. In particular, a particle size distribution analyzer in which the dynamic light scattering method is used as a measurement principle, for example, "Microtrac^{™} UPA" manufactured by Nikkiso Co., Ltd. can be used.

In this embodiment, the lower limit of the content of the pigment in the ink-jet ink composition varies depending on the type of the pigment used. From the viewpoint of ensuring good chromogenic properties, the lower limit of the content of the pigment is preferably 1.0% by mass or more with respect to the total mass of the ink, more preferably 3.0% by mass or more, and furthermore preferably 4.0% by mass or more. In order to ensure discharge stability from the ink jet head 3, the upper limit of the content of the pigment is preferably 30.0% by mass or less, more preferably 15.0% by mass or less, and furthermore preferably 12.0% by mass or less.

The above-mentioned pigments may be used alone or in combination. In order to enhance the dispersibility in the ink composition, it is preferable that the pigments are preferably surface-treated or the ink composition is blended with a dispersant or the like. The surface treatment of pigment is a method in which hydrophilic groups such as carboxy groups or sulfo groups are introduced to the surfaces of particles of the pigment by physical treatment or chemical treatment. The surface treatment of the pigment enables the pigment to be dispersed in an aqueous medium such as water.

A dispersant for use in an aqueous medium has such an action that hydrophobic groups which are hydrophobic moieties in a molecular structure are adsorbed on the surfaces of particles of pigment and hydrophilic groups which are hydrophilic moieties are oriented on the medium side. This action enables the pigment to be dispersed in the aqueous medium. The dispersant used may be a known surfactant or polymeric compound. A method in which the pigment particles are coated with the polymeric compound or the like such that dispersibility is imparted may be used. An acid precipitation method, a phase-inversion emulsification method, a mini-emulsion polymerization method, or the like can be used as a method for coating the pigment particles.

### 2.2 Urethane Resin Particles Having Crosslinking Group

The ink-jet ink composition according to this embodiment contains the resin particles, which are the urethane resin particles having the crosslinking group.

The urethane resin particles having the crosslinking group may be used in the form of emulsion or solution. From the viewpoint of reducing the increase in viscosity of the ink, the urethane resin particles having the crosslinking group are preferably used in the form of emulsion. Examples of the crosslinking group include an isocyanate group and a silanol group. The crosslinking group used is preferably a blocked isocyanate group obtained by chemically protecting, that is, capping or blocking an isocyanate group. The blocked isocyanate group is deprotected by heating and is thereby activated to form, for example, a bond such as a urethane bond, a urea bond, or an allophanate bond.

Each molecule of the urethane resin particles having the crosslinking group preferably has three or more crosslinking groups. In this case, a crosslinking structure is formed by the reaction of the crosslinking groups. The term "urethane resin" as used herein refers to resin containing a urethane bond, urea bond, or allophanate bond formed by the reaction of an isocyanate group with another reactive group such as, for example, a hydroxy group, an amino group, a urethane group, a carboxy group, or the like. Thus, in the present specification, for example, a urea resin is included in a urethane resin. The urethane resin is preferably a compound, obtained by the reaction of a compound having an isocyanate group with a compound having a hydroxy group, having a urethane bond.

A blocked isocyanate contains a latent isocyanate group formed by blocking an isocyanate group with a blocking agent and can be obtained by the reaction of, for example, a polyisocyanate compound with the blocking agent.

Examples of the polyisocyanate compound include polyisocyanate monomers and polyisocyanate derivatives. Examples of the polyisocyanate monomers include polyisocyanates such as aromatic polyisocyanates, aliphatic polyisocyanates, and alicyclic polyisocyanates. The polyisocyanate monomers may be used alone or in combination.

Examples of the polyisocyanate derivatives include oligomers of the polyisocyanate monomers, dimers of the polyisocyanate monomers, modified isocyanurates, trimers of modified iminooxadiazinedione, pentamers of modified iminooxadiazinedione, heptamers of modified iminooxadiazinedione, modified allophanates produced by the reaction of the polyisocyanate monomers with low-molecular weight polyols below, modified polyols (alcohol adducts) produced by the reaction of the polyisocyanate monomers with the low-molecular weight polyols, modified biurets produced by the reaction of the polyisocyanate monomers with water or amines, modified ureas produced by the reaction of the polyisocyanate monomers with diamines, modified oxadiazinetriones such as oxadiazinetriones produced by the reaction of the polyisocyanate monomers with carbon dioxide, modified carbodiimides produced by the decarboxycondensation of the polyisocyanate monomers, modified uretdiones, and modified uretonimines.

In a case where two or more types of polyisocyanate compounds are used in combination, two or more types of polyisocyanate compounds may be allowed to react at the same time in, for example, the production of a blocked isocyanate or blocked isocyanates obtained separately using the polyisocyanate compounds may be mixed together.

The blocking agent blocks an isocyanate group to deactivate the isocyanate group, regenerates or activates the isocyanate group after deblocking, and has the function of catalyzing the activation of the isocyanate group in such a state that the isocyanate group is blocked and such a state that the isocyanate group is deblocked.

Examples of the blocking agent include imidazole compounds, imidazoline compounds, pyrimidine compounds, guanidine compounds, alcohol compounds, phenol compounds, activated methylene compounds, amine compounds, imine compounds, oxime compounds, carbamic acid compounds, urea compounds, acid amide (lactam) compounds, acid imide compounds, triazole compounds, pyrazole compounds, mercaptan compounds, and bisulfites.

Details of the blocking agent is described below. Incidentally, for some exemplified compounds, the dissociation temperature is described as the temperature at which an isocyanate group is regenerated.

Examples of the imidazole compounds include imidazole (a dissociation temperature of 100 °C), benzimidazole (a dissociation temperature of 120 °C), 2-methylimidazole (a dissociation temperature of 70 °C), 4-methylimidazole (a dissociation temperature of 100 °C), 2-ethylimidazole (a dissociation temperature of 70 °C), 2-isopropylimidazole, 2,4-dimethylimidazole, and 2-ethyl-4-methylimidazole.

Examples of the imidazoline compounds include 2-methylimidazoline (a dissociation temperature of 110 °C) and 2-phenylimidazoline.

Examples of the pyrimidine compounds include 2-methyl-1,4,5,6-tetrahydropyrimidine.

Examples of the guanidine compounds include 3,3-dialkylguanidines such as 3,3-dimethylguanidine, 1,1,3,3-tetraalkylguanidines such as 1,1,3,3-tetramethylguanidine (a dissociation temperature of 120 °C), and 1,5,7-triazabicyclo(4,4,0)deca-5-ene.

Examples of the alcohol compounds include methanol, ethanol, 2-propanol, n-butanol, s-butanol, 2-ethylhexylalcohol, 1-octanol, 2-octanol, cyclohexyl alcohol, ethylene glycol, benzyl alcohol, 2,2,2-trifluoroethanol, 2,2,2-trichloroethanol, 2-(hydroxymethyl)furan, 2-methoxyethanol, methoxypropanol, 2-ethoxyethanol, n-propoxyethanol, 2-butoxyethanol, 2-ethoxyethoxyethanol, 2-ethoxybutoxyethanol, butoxyethoxyethanol, 2-butoxyethylethanol, 2-butoxyethoxyethanol, N,N-dibutyl-2-hydroxyacetamide, N-hydroxysuccinimide, N-morpholine ethanol, 2,2-dimethyl-1,3-dioxolane-4-methanol, 3-oxazolidineethanol, 2-hydroxymethylpyridine (a dissociation temperature of 140 °C), furfuryl alcohol, 12-hydroxystearic acid, triphenylsilanol, and 2-hydroxyethyl methacrylate.

Examples of the phenol compounds include phenol, cresol, ethylphenol, n-propylphenol, isopropylphenol, n-butylphenol, s-butylphenol, t-butylphenol, n-hexylphenol, 2-ethylhexylphenol, n-octylphenol, n-nonylphenol, di-n-propylphenol, diisopropylphenol, isopropylcresol, di-n-butylphenol, di-s-butylphenol, di-t-butylphenol, di-n-octylphenol, di-2-ethylhexylphenol, di-n-nonylphenol, nitrophenol, bromophenol, chlorophenol, fluorophenol, dimethylphenol, styrenized phenol, methyl salicylate, methyl 4-hydroxybenzoate, benzyl 4-hydroxybenzoate, 2-ethylhexyl hydroxybenzoate, 4-[(dimethylamino)methyl]phenol, 4-[(dimethylamino)methyl]nonylphenol, 2,2-bis(4-hydroxyphenyl)acetic acid, 2-hydroxypyridine (a dissociation temperature of 80 °C), 2-hydroxyquinoline, 8-hydroxyquinoline, 2-chloro-3-pyridinol, and pyridine-2-thiol (a dissociation temperature of 70 °C).

Examples of the activated methylene compounds include Meldrum's acid; dialkyl malonates such as dimethyl malonate, diethyl malonate, di-n-butyl malonate, di-t-butyl malonate, di-2-ethylhexyl malonate, methyl n-butyl malonate, ethyl n-butyl malonate, methyl s-butyl malonate, ethyl s-butyl malonate, methyl t-butyl malonate, ethyl t-butyl malonate, diethyl methylmalonate, dibenzyl malonate, diphenyl malonate, benzyl methyl malonate, ethyl phenyl malonate, t-butyl phenyl malonate, and isopropylidene malonate; alkyl acetoacetates such as methyl acetoacetate, ethyl acetoacetate, n-propyl acetoacetate, isopropyl acetoacetate, n-butyl acetoacetate, t-butyl acetoacetate, benzyl acetoacetate, and phenyl acetoacetate; 2-acetoacetoxyethyl methacrylate; acetylacetone; and ethyl cyanoacetate.

Examples of the amine compounds include dibutylamine, diphenylamine, aniline, N-methylamine, carbazole, bis(2,2,6,6-tetramethylpiperidinyl)amine, di-n-propylamine, diisopropylamine (a dissociation temperature of 130 °C), isopropylethylamine, 2,2,4-trimethylhexamethyleneamine, 2,2,5- trimethylhexamethyleneamine, N-isopropylcyclohexylamine (a dissociation temperature of 140 °C), dicyclohexylamine (a dissociation temperature of 130 °C), bis(3,5,5-trimethylcyclohexyl)amine, piperidine, 2,6-dimethylpiperidine (a dissociation temperature of 130 °C), t-butylmethylamine, t-butylethylamine (a dissociation temperature of 120 °C), t-butylpropylamine, t-butylbutylamine, t-butylbenzylamine (a dissociation temperature of 120 °C), t-butylphenylamine, 2,2,6-trimethylpiperidine, 2,2,6,6-tetramethylpiperidine (a dissociation temperature of 80 °C), (dimethylamino)-2,2,6,6-tetramethylpiperidine, 2,2,6,6-tetramethyl-4-piperidine, 6-methyl-2-piperidine, and 6-aminocaproic acid.

Examples of the imine compounds include ethyleneimine, polyethyleneimine, 1,4,5,6-tetrahydropyrimidine, and guanidine.

Examples of the oxime compounds include formaldoxime, acetaldoxime, acetoxime, methylethylketooxime (a dissociation temperature of 130 °C), cyclohexanone oxime, diacetyl monooxime, benzophenone oxime, 2,2,6,6-tetramethylcyclohexanone oxime, diisopropylketone oxime, methyl-t-butylketone oxime, diisobutylketone oxime, methylisobutylketone oxime, methylisopropylketone oxime, methyl-2,4-dimethylpentylketone oxime, methyl-3-ethylheptylketone oxime, methylisoamylketone oxime, n-amylketone oxime, 2,2,4,4-tetramethyl-1,3-cyclobutanedione monooxime, 4,4'-dimethoxybenzophenone oxime, and 2-heptanone oxime.

Examples of the carbamic acid compounds include phenyl N-phenylcarbamate.

Examples of the urea compounds include urea, thiourea, and ethyleneurea.

Examples of the acid amide (lactam) compounds include acetanilide, N-methylacetamide, acetamide, ε-caprolactam, δ-valerolactam, γ-butyrolactam, pyrrolidone, 2,5-piperazinedione, and laurolactam.

Examples of the acid imide compounds include succinimide, maleimide, and phthalimide.

Examples of the triazole compounds include 1,2,4- triazole and benzotriazole.

Examples of the pyrazole compounds include pyrazole, 3,5-dimethylpyrazole (a dissociation temperature of 120 °C), 3,5-diisopropylpyrazole, 3,5-diphenylpyrazole 3,5-di-t-butylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole.

Examples of the mercaptan compounds include butyl mercaptan, dodecyl mercaptan, and hexyl mercaptan.

Examples of the bisulfites include sodium bisulfite.

The blocking agent is not limited to the above. Furthermore, other examples of the blocking agent include benzoxazolone, isatoic anhydride, and tetrabutylphosphonium acetate.

These blocking agents can be used alone or in combination. The dissociation temperature of the blocking agent can be appropriately selected. The dissociation temperature thereof is preferably, for example, 60 °C to 230 °C, more preferably 80 °C to 200 °C, furthermore preferably 100 °C to 180 °C, and still furthermore preferably 110 °C to 160 °C. According to these temperature ranges, the pot life of the ink-jet ink composition can be maintained sufficiently long and there is the effect of not excessively increasing the temperature of a heating step.

The temperature of a heating step of the ink jet recording method according to this embodiment is set such that at least one of crosslinking groups is activated in consideration of the deprotection temperature of an isocyanate group of the urethane resin particles having the crosslinking group, that is, the dissociation temperature thereof.

The main chain of the urethane resin particles having the crosslinking group may be any one of a polyether type including an ether bond, a polyester type including an ester bond, and a polycarbonate type including a carbonate bond. The elongation at break and 100% modulus of a crosslinked product formed by crosslinking the urethane resin particles having the crosslinking group can be adjusted by changing the density of crosslinks and the type of such a main chain. Among these, urethane resin particles having a polycarbonate skeleton or a polyether skeleton have a good balance between elongation at break and 100% modulus and are more preferable in that the friction fastness of an image or the texture of a textile print is likely to be enhanced. Polycarbonate-based urethane resin particles having a polycarbonate skeleton tend to be capable of being improved in friction fastness and are preferable. Pigment is likely to be fixed to a surface of fabric and a textile print having excellent chromogenic properties and friction fastness is obtained.

The urethane resin particles having the crosslinking group is preferably blended in the form of emulsion. Such a resin emulsion is a so-called self-reactive urethanic resin emulsion. A commercial product can be used as a urethanic resin emulsion having an isocyanate group blocked with a blocking agent having a hydrophilic group.

As commercial products of the urethane resin particles having the crosslinking group, the following products can be exemplified: Takelac WS-6021 (trade name, urethanic resin emulsion produced by Mitsui Chemical SKC Polyurethane Co., Ltd., polyether-based polyurethane having a polyether-derived skeleton), Takelac WS-5100 (trade name, urethanic resin emulsion produced by Mitsui Chemical SKC Polyurethane Co., Ltd., polycarbonate-based polyurethane having a polycarbonate-derived skeleton), ELASTRON E-37, ELASTRON H-3 (the above being polyester-based polyurethanes having a polyester-derived skeleton), ELASTRON H-38, ELASTRON BAP, ELASTRON C-52, ELASTRON F-29, ELASTRON W-11P (the above being polyether-based polyurethanes having a polyether-derived skeleton) (trade names, urethanic resin emulsions produced by Dai-ichi Kogyo Seiyaku Co., Ltd.), SUPERFLEX 870, SUPERFLEX 800, SUPERFLEX 150, SUPERFLEX 420, SUPERFLEX 460, SUPERFLEX 470, SUPERFLEX 610, SUPERFLEX 700 (trade names, urethanic resin emulsions produced by Dai-ichi Kogyo Seiyaku Co., Ltd.), Permarin UA-150 (trade name, urethanic resin emulsion produced by Sanyo Chemical Industries, Ltd.), Sancure 2710 (trade name, urethanic resin emulsion produced by Japan Lubrizol Corporation), NeoRez R-9660, NeoRez R-9637, NeoRez R-940 (trade names, urethanic resin emulsions produced by Kusumoto Chemicals, Ltd.), ADEKA BONTIGHTER HUX-380, ADEKA BONTIGHTER HUX-290K (trade names, urethanic resin emulsions produced by Adeka Corporation), and ETERNACOLL UW-1501F (trade name, urethanic resin emulsion produced by Ube Industries, Ltd.).

In this embodiment, the urethane resin particles having the crosslinking group form a resin film by heating after recording to enhance the fixation of an image formed from the ink composition. This enhances the friction fastness of the obtained image.

On the other hand, for the urethane resin particles having the crosslinking group, when the ink dries in the vicinity of a nozzle in an intermittent mode, the viscosity of the ink increases locally because of the increase in concentration of solid matter in the ink and the urethane resin particles approach each other or collide with each other to grow into large-sized particles, aggregate, or form a film. This destabilizes discharge during recording to reduce intermittent discharge characteristics in some cases.

Although the ink-jet ink composition according to this embodiment contains the urethane resin particles having the crosslinking group having such characteristics, discharge stability and intermittent discharge characteristics can be maintained good because the ink-jet ink composition according to this embodiment contains the lubricant, which has a mean particle size of 200 nm or less as described below, and the lubricant is present between the resin particles in the form of spacers. Using an ink jet head having a circulation path circulating the ink composition during recording further enhances discharge stability and intermittent discharge characteristics.

In this embodiment, the mean particle size D50 of the urethane resin particles having the crosslinking group is preferably 100 nm or less, more preferably 90 nm or less, and furthermore preferably 80 nm or less. The mean particle size D50 of urethane resin particles having the crosslinking group is preferably 20 nm or more, more preferably 30 nm or more, and furthermore preferably 40 nm or more. Setting the mean particle size of the resin particles to the above ranges allows the resin particles to be unlikely to aggregate.

In this embodiment, the content of the urethane resin particles having the crosslinking group is preferably 1.0% by mass or more in terms of solid matter with respect to the total mass of the ink, more preferably 3.0% by mass or more, further more preferably 5.0% by mass or more, and particularly preferably 7.0% by mass or more. The upper limit of the content of the urethane resin particles is preferably 20.0% by mass or less, more preferably 15.0% by mass or less, and furthermore preferably 10.0% by mass or less. Setting the content of the urethane resin particles to the above ranges enhances the friction fastness of an obtained image to enhance the rubfastness thereof.

When the content of the resin particles is within the above ranges, aggregates are likely to occur in the ink to clog a nozzle during recording and discharge stability and intermittent discharge characteristics are likely to be reduced. However, according to this embodiment, since the lubricant, which has a mean particle size of 200 nm or less as described below, is contained, the lubricant is present between the resin particles in the form of spacers to suppress aggregation; hence, discharge stability and intermittent discharge characteristics can be maintained good. In recording using the ink-jet ink composition according to this embodiment, using an inkjet recording apparatus including the pressure chambers and the circulation paths, which circulate the ink composition in the pressure chambers, allows the ink in the pressure chambers or nozzles to be refreshed. This suppresses clogging due to aggregates of the resin particles and allows discharge stability and intermittent discharge characteristics to be good.

In this embodiment, when the ink-jet ink composition is a textile printing ink-jet ink composition, a recording medium is fabric. Since the fabric has an elastic property, a recorded image, that is, an ink film formed from the ink is preferably elastic or stretchable. That is, when the ink film has such elongation that the ink film can follow the expansion and contraction of the fabric to expand and contract, the fracture or cracking of the ink film is prevented, friction fastness is ensured, and an image with excellent rubfastness can be obtained.

Thus, when the ink-jet ink composition according to this embodiment is the textile printing ink-jet ink composition, the urethane resin particles having the crosslinking group preferably have a glass transition temperature (Tg) of 5 °C or lower, more preferably 0 °C or lower, and further more preferably -10 °C or lower. The lower limit of the glass transition temperature thereof is preferably -25 °C or higher. In particular, when the glass transition temperature thereof is 5 °C or lower, the minimum film-forming temperature decreases; hence, resin is readily formed into a film and the texture of a textile print can be maintained good. When the glass transition temperature thereof is -25 °C or higher, the strength of an obtained film is readily maintained. In this embodiment, using such resin particles allows the texture of a textile print to be good, prevents the fracture or cracking of an ink film, enables friction fastness to be ensured.

When the glass transition temperature thereof is 5 °C or lower, aggregates are likely to occur in the ink to clog a nozzle during recording and discharge stability and intermittent discharge characteristics are likely to be reduced. However, according to this embodiment, since the lubricant, which has a mean particle size of 200 nm or less as described below, is contained, the lubricant is present between the resin particles in the form of spacers to suppress aggregation; hence, discharge stability and intermittent discharge characteristics can be maintained good. In recording using the ink-jet ink composition according to this embodiment, using the inkjet recording apparatus including the pressure chambers and the circulation paths, which circulate the ink composition in the pressure chambers, allows the ink in the pressure chambers or nozzles to be refreshed. This suppresses clogging due to aggregates of the resin particles and allows discharge stability and intermittent discharge characteristics to be good.

### 2.3. Lubricant

In this embodiment, the ink-jet ink composition contains the lubricant, which has a mean particle size D50 of 200 nm or less. Since the ink-jet ink composition contains the lubricant, discharge stability is enhanced. The urethane resin particles having the crosslinking group have good friction fastness. However, the urethane resin particles have high reactivity, approach each other, collide with each other to grow into large-sized particles, aggregate, or form a film to destabilize discharge in some cases. In this embodiment, the lubricant, which is contained in the ink composition, is present between the urethane resin particles, which are likely to aggregate, in the form of spacers to suppress the aggregation of the urethane resin particles. As a result, discharge stability is enhanced.

In this embodiment, examples of the lubricant include botanical/animal waxes such as carnauba wax, candelilla wax, beeswax, rice wax, and lanolin; mineral waxes such as montan wax and ozokerite; paraffin waxes, that is, so-called petroleum waxes; synthetic waxes such as carbon wax, Hoechst wax, polyolefin wax, silicone wax, and stearamide; natural/synthetic wax emulsions such as an α-olefin-maleic anhydride copolymer; and waxes such as blend wax. These waxes have the function of imparting slip properties to a surface of a formed recording to enhance the rubfastness thereof and therefore also have the function of enhancing the friction fastness of the recording. These waxes may be used alone or in combination. Among these waxes, silicone wax, polyolefin wax, paraffin wax, or the like is preferably used. These waxes contain few polar groups and are unlikely to react with crosslinking groups of the urethane resin particles having the crosslinking group; hence, aggregates are unlikely to occur.

Examples of commercial products of silicone wax include SM8706EX, SM7036EX, SM7060EX, SM7025EX, SM490EX, SM8701EX, SM8709SR, SM8716SR, IE-7045, IE-7046T, SH7024, BY22-744EX, BY22-818EX, FZ-4658, FZ-4634EX, FZ-4602 (trade names, produced by Dow Corning Toray Co., Ltd.), POLON-MF-14, POLON-MF-14EC, POLON-MF-23, POLON-MF-63, POLON-MF-18T, POLON-MF-56, POLON-MF-49, POLON-MF-33A, POLON-MF-55T, POLON-MF-28T, POLON-MF-50, POLON-MK-206, POLON-SR-CONC, KM-9771, KM-9774, KM-2002-T, KM-2002-L-1, KM-9772, KS-7002, KS-701, and X-51-1264 (trade names, produced by Shin-Etsu Chemical Co., Ltd.).

Examples of polyolefin wax include olefins such as ethylene, propylene, and butylene; waxes produced from derivatives of the olefins; and copolymers of the olefins. Particular examples of polyolefin wax include polyethylene wax, polypropylene wax, and polybutylene wax. Polyolefin waxes may be used alone or in combination. Among these, polyethylene wax is preferable from the viewpoint that polyethylene wax is unlikely to react with crosslinking groups of the urethane resin particles having the crosslinking group and is excellent in discharge stability.

Examples of commercial products of polyolefin wax include AQUACER series such as AQUACER 513 (polyethylene wax, a mean particle size of 100 nm to 200 nm, a melting point of 130 °C, a solid content of 30%), AQUACER 507, AQUACER 515, AQUACER 840, and AQUACER 1547 (trade names, produced by BYK Japan K.K.); Hytec series such as Hytec E-7025P, Hytec E-2213, Hytec E-6500, Hytec E-6314, Hytec E-9460, Hytec E-9015, Hytec E-4A, Hytec E-5403P, and Hytec E-8237 (trade names, produced by Toho Chemical Industry Co., Ltd., polyethylene wax); and Nopcote PEM-17 (trade name, produced by San Nopco Ltd., polyethylene emulsion, a mean particle size of 40 nm).

Paraffin waxes are so-called petroleum waxes. Herein, paraffin means an alkane containing 20 or more carbon atoms. In this embodiment, the term "paraffin wax" refers to a mixture which mainly contains a linear paraffinic hydrocarbon containing 20 to 30 carbon atoms and which also contains a small amount of a hydrocarbon, having a molecular weight of about 300 to 500, including isoparaffin. When the ink contains paraffin wax, slip properties are imparted to recordings, whereby the rubfastness thereof is enhanced. Paraffin wax has hydrophobic properties and enhances the water resistance of recordings if the amount thereof is appropriate. These functions enhance the friction fastness of an obtained recording.

Examples of commercial products of paraffin wax include AQUACER 537 and AQUACER 539 (trade names, produced by BYK Japan K.K.).

In this embodiment, the lubricant is preferably contained in the ink in the form of fine particles, that is, in the form of emulsion or suspension. This allows the viscosity of the ink to be readily adjusted to an appropriate range in discharge using an ink jet head and also allows discharge stability and intermittent discharge characteristics during recording to be readily ensured.

In this embodiment, the mean particle size D50 of the lubricant is preferably 200 nm or less, more preferably 150 nm or less, and furthermore preferably 100 nm or less. The mean particle size D50 of the lubricant is preferably 10 nm or more, more preferably 40 nm or more, and furthermore preferably 60 nm or more. When the mean particle size D50 of the lubricant is within the above ranges, discharge stability, intermittent discharge characteristics, and the friction fastness of a formed image are enhanced.

The ratio of the mean particle size D50 of the resin particles to the mean particle size D50 of the lubricant is preferably from 0.5 to 1.5, more preferably from 0.7 to 1.2, and furthermore preferably from 0.8 to 1.0. When the lubricant and the urethane resin have substantially the same particle size, the lubricant is likely to act as a spacer and discharge stability and intermittent discharge characteristics can be maintained good.

In this embodiment, the melting point of the lubricant is preferably 100 °C or higher, more preferably 120 °C or higher, and furthermore preferably 140 °C or higher. The melting point of the lubricant is preferably, but is not limited to, 200 °C or lower. When the melting point of the lubricant is a certain level or higher, the lubricant is unlikely to aggregate and discharge stability and intermittent discharge characteristics are good.

The content of the lubricant is preferably 0.1% by mass to 10.0% by mass in terms of solid matter with respect to the total mass of the ink, more preferably 0.5% by mass to 5.0% by mass, and furthermore preferably 1.0% by mass to 4.0% by mass. When the content of the lubricant is within the above ranges, discharge stability, intermittent discharge characteristics, and the friction fastness of a formed image are enhanced.

### 2.4. Water

In this embodiment, the ink composition is an aqueous pigment ink composition containing water. After the ink composition is applied to a recording medium, water is evaporated and scattered by drying. Water used is preferably a pure water produce such as ion-exchanged water, ultrafiltered water, reverse osmosis-purified water, or distilled water or ultrapure water. In particular, water sterilized by ultraviolet irradiation or the addition of hydrogen peroxide is preferred in that the growth of mold and bacteria is suppressed for a long period of time.

The content of water in the ink composition is not particularly limited. The content of water in the ink composition is preferably 40.0% by mass to 90.0% by mass, more preferably 50.0% by mass to 80.0% by mass, and furthermore preferably 55.0% by mass to 70.0% by mass.

### 2.5. Organic Solvent

In this embodiment, the ink-jet ink composition contains the organic solvent. Since the ink composition contains the organic solvent, the discharge stability of the ink composition by an ink jet process can be maintained good and the evaporation of water from an inkjet head can be effectively suppressed during long-term disuse.

Examples of the organic solvent include a polyol compound, a glycol ether, and a betaine compound.

The polyol compound is, for example, a polyol compound which contains two to six carbon atoms in its molecule and which may contain one ether bond in its molecule and are preferably a diol compound. Examples of the polyol compound include glycols such as 1,2-pentanediol, glycerin, ethylene glycol, diethylene glycol, triethylene glycol, polyethylene glycol, propylene glycol, dipropylene glycol, triethylene glycol, polypropylene glycol, polyoxyethylene polyoxypropylene glycol, 1,2-hexanediol, 1,2-heptanediol, 1,3-propanediol, 1,2-butanediol, 1,3-butanediol, 1,4-butanediol, 2,3-butanediol, 2-methyl-3-phenoxy-1,2-propanediol, 3-(3-methylphenoxy)-1,2-propanediol, 3-hexyloxy-1,2-propanediol, 2-hydroxymethyl-2-phenoxymethyl-1,3-propanediol, 3-methyl-1,3-butanediol, 1,3-propanediol, 1,2-pentanediol, 1,5-pentanediol, 1,6-hexanediol, 2-methyl-2,4-pentanediol, and 3-methyl-1,5-pentanediol.

Examples of the glycol ether include monoalkyl ethers of glycols selected from ethylene glycol, diethylene glycol, triethylene glycol, polyethylene glycol, propylene glycol, dipropylene glycol, triethylene glycol, polypropylene glycol, and polyoxyethylene polyoxypropylene glycol. Among the monoalkyl ethers, triethylene glycol monomethyl ether, triethylene glycol monobutyl ether, and dipropylene glycol monopropyl ether are preferable.

The betaine compound is a compound (intramolecular salt) which has a positive charge and a negative charge at non-neighboring positions in a single molecule which contains no dissociable hydrogen atom bonded to an atom having a positive charge, and which has no charge as a whole molecule. The betaine compound is preferably an N-alkyl substitute of an amino acid and more preferably an N-trialkyl substitute of an amino acid. Examples of the betaine compound include trimethyl glycine, γ-butyrobetaine, homarine, trigonelline, carnitine, homoserine betaine, valine betaine, lysine betaine, ornithine betaine, alanine betaine, stachydrine, and betaine glutamate. Trimethyl glycine is preferable.

The organic solvent used may be a pyrrolidone derivative. Examples of the pyrrolidone derivative include N-methyl-2-pyrrolidone, N-ethyl-2-pyrrolidone, N-vinyl-2-pyrrolidone, 2-pyrrolidone, N-butyl-2-pyrrolidone, and 5-methyl-2-pyrrolidone.

The organic solvent may be used in combination with one or more organic solvents. From the viewpoint of adjusting the viscosity of the ink composition and the viewpoint of preventing clogging by a moisturizing effect, the content of the organic solvent is preferably 0.2% by mass to 30.0% by mass with respect to the total mass of the ink composition and more preferably 1.0% by mass to 25.0% by mass.

In this embodiment, the ink composition preferably has a glycerin content of 15.0% by mass or less, more preferably 10.0% by mass or less, furthermore preferably 6.0% by mass or less, and still furthermore preferably 5.5% by mass or less. The glycerin content is preferably 1.0% by mass or more, more preferably 3.0% by mass or more, and furthermore preferably 5.0% by mass or more. When the glycerin content is more than 15.0% by mass, the friction fastness of an image is likely to be reduced, though discharge stability and intermittent discharge characteristics are enhanced. However, in the ink composition according to this embodiment, even though the glycerin content is within the above ranges, discharge stability and intermittent discharge characteristics are obtained, drying properties of the ink are good, and the friction fastness of an image is enhanced.

When a large amount of the resin particles are contained and the glass transition temperature is low as described above, aggregates are likely to occur and nozzles are likely to be clogged to reduce discharge stability during recording. Therefore, in general, a large amount of a polyhydric alcohol, such as glycerin, having a high boiling point is usually added. In this embodiment, using the ink jet recording apparatus including the pressure chambers and the circulation paths, which circulate the ink composition in the pressure chambers, enables the drying of the ink composition or the occurrence of aggregates to be suppressed in the vicinity of the nozzles. Therefore, a large amount of glycerin, which is a moisturizing component, need not be added and the content thereof can be reduced. Since the drying of the ink composition or the occurrence of aggregates can be suppressed in the vicinity of the nozzles at such a low content as described above, the content of a moisturizing component with a high boiling point can be reduced. As a result, drying properties of a recording are good and the friction fastness of an image is enhanced. Furthermore, the drying temperature can be reduced.

### 2.6. Surfactant

In this embodiment, the ink composition preferably contains a surfactant. The surfactant can be used as a wetting agent for reducing the surface tension of the ink composition to adjust the wettability to a recording medium, that is, the permeability. When the ink composition contains the surfactant, discharge stability from an inkjet head is ensured.

The surfactant used may be any of a nonionic surfactant, an anionic surfactant, a cationic surfactant, and an amphoteric surfactant. These surfactants may be used in combination. Among surfactants, an acetylene glycol surfactant, a silicone surfactant, and a fluorinated surfactant can be successfully used.

Examples of the acetylene glycol surfactant include, but are not limited to, SURFYNOL^{®} 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, DF110D (trade names, Nissin Chemical Industry Co., Ltd.), Olfine^{®} B, Y, P, A, STG, SPC, E1004, E1010, PD-001, PD-002W, PD-003, PD-004, PD-005, EXP. 4001, EXP. 4300, EXP. 4036, EXP. 4051, AF-103, AF-104, AK-02, SK-14, AE-3 (trade names, Nissin Chemical Industry Co., Ltd.), Acetylenol^{®} E00, E00P, E40, and E100 (trade names, Kawaken Fine Chemicals Co., Ltd.).

The silicone surfactant is not particularly limited and is preferably a polysiloxane compound. The polysiloxane compound is not particularly limited and is preferably a polyether-modified organosiloxane. Examples of commercial products of the polyether-modified organosiloxane include BYK^{®}-306, BYK^{®}-307, BYK^{®}-333, BYK^{®}-341, BYK^{®}-345, BYK^{®}-346, BYK^{®}-348 (trade names, BYK Chemie Japan K.K.), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (trade names, Shin-Etsu Chemical Co., Ltd.).

The fluorinated surfactant used is not particularly limited and is preferably a fluorine-modified polymer. Examples of the fluorinated surfactant include BYK^{®}-340 (a trade name, BYK Chemie Japan K.K.).

When the ink composition contains the surfactant, a plurality of types of the above surfactants can be used. The sum of the contents of the surfactants is preferably 0.01% by mass to 3.0% by mass with respect to the total mass of the ink, more preferably 0.05% by mass to 2.0% by mass, further more preferably 0.1% by mass to 1.5% by mass, and particularly preferably 0.2% by mass to 1.0% by mass.

### 2.7. Other Additives

### 2.7.1. Chelating Agent

In this embodiment, the ink composition preferably contains an appropriate amount of a chelating agent for the purpose of removing unnecessary ions in the ink. Examples of the chelating agent include dihydrogen disodium ethylenediaminetetraacetate, ethylenediamine nitrilotriacetate, hexametaphosphates, pyrophosphates, metaphosphates, ethylenediaminetetraacetic acid, and salts thereof. When the chelating agent is contained, the content of the chelating agent may be 0.01% by mass to 1.0% by mass with respect to the total mass of the ink.

### 2.7.2. pH Adjustor

In this embodiment, the ink composition may contain a pH adjustor for the purpose of adjusting the pH thereof. The pH adjustor is not particularly limited and may be acid, base, weak acid, weak base, or an appropriate combination thereof. Examples of the pH adjustor include tertiary alkanolamines such as triethanolamine and triisopropanolamine. When the pH adjustor is contained, the content of the pH adjustor is preferably, for example, 0.01% by mass to 2.0% by mass with respect to the total mass of the ink composition, more preferably 0.1% by mass to 1.0% by mass, and further more preferably 0.2% by mass to 0.5% by mass.

### 2.7.3. Preservative or Fungicide

In this embodiment, a preservative or a fungicide may be appropriately added to the ink composition. Examples of the preservative or the fungicide include sodium benzoate; sodium pentachlorophenolate; sodium 2-pyridinethiol-1-oxide; sodium sorbate; sodium dehydroacetate; 1,2-dibenzothiazoline-3-one such as Proxel CRL, Proxel BDN, Proxel GXL, Proxel XL-2, Proxel TN, or Proxel LV available from Lonza Japan Ltd.; and 4-chloro-3-methylphenol such as Preventol^{®} CMK available from Bayer Holdings Co., Ltd.

### 2.7.4. Others

The ink composition may further contain, for example, an additive, such as a rust preventive including benzotriazole, an oxidation inhibitor, an ultraviolet absorber, an oxygen absorber, or a dissolution aid, usually usable in ink for ink jet as a component other than the above.

### 2.8. Method for Preparing Ink-Jet Ink Composition

In this embodiment, the ink-jet ink composition is obtained in such a manner that the above-mentioned components are mixed in an arbitrary order and impurities are removed by filtration or the like as required. As a method for mixing the components, the following method is preferably used: a method in which materials are sequentially added to a container equipped with a stirrer such as a mechanical stirrer or a magnetic stirrer, followed by agitation and mixing. A filtration method used may be centrifugal filtration, filter filtration, or the like.

### 2.9. Physical Properties of Ink-jet Ink Composition

### 2.9.1. Surface Tension

In this embodiment, the ink composition preferably has a surface tension of 20 mN/m to 40 mN/m at 20 °C and more preferably 30 mN/m to 36 mN/m from the viewpoint of a balance between textile print quality and reliability as an ink-jet ink. When the surface tension thereof is within the above ranges, discharge stability is excellent in ink jet recording, the ink is likely to uniformly spread on a recording medium when the ink is applied to fabric, and the ink is likely to permeate the recording medium. This allows the ink to be readily fixed to the recording medium.

The surface tension can be measured in such a manner that a platinum plate is wetted with the ink and the ink is determined for surface tension in a 20 °C atmosphere using, for example, an automatic surface tensiometer, CBVP-Z (trade name, manufactured by Kyowa Interface Science Co., Ltd.). A technique for adjusting the surface tension within the above ranges is to appropriately adjust the types of the above-mentioned organic solvent and surfactant and the amounts of the organic solvent, the surfactant, and added water.

### 2.9.2. Viscosity

The viscosity of the ink at 20 °C is preferably 1.5 mPa·s to 122.0 mPa·s and more preferably 2.0 mPa·s to 102.0 mPa·s. When the viscosity of the ink at 20 °C is within the above ranges, the ink is readily fixed when the ink is applied to fabric, whereby chromogenic properties are enhanced.

The viscosity can be measured with, for example, a rheometer MCR-300 (trade name, manufactured by Physica). A technique for adjusting the viscosity within the above ranges is to appropriately adjust the types of the above-mentioned organic solvent and surfactant and the amounts of the organic solvent, the surfactant, and added water.

When the viscosity of the ink composition is high, even a small change in composition due to the evaporation of a slight amount of a solvent significantly increases the viscosity and therefore it is difficult to ensure discharge stability. However, in this embodiment, using the ink jet recording apparatus including the pressure chambers and the circulation paths, which circulate the ink composition in the pressure chambers, allows the ink in nozzles to be refreshed and also allows a change in composition in the vicinity of the nozzles to be suppressed. This allows the discharge stability of the ink to be readily ensured even if the ink has high viscosity. Since the content of the moisturizing component can be reduced as described above and discharge stability can be ensured even though the viscosity is high, the amounts of the added resin particles and pigment can be increased and ink with more excellent chromogenic properties and friction fastness can be obtained.

In this embodiment, when the aqueous ink-jet ink composition containing the pigment and the resin particles is an aqueous ink-jet ink composition used to make a record on a low ink-absorbing or ink non-absorbing unabsorbent recording medium, the aqueous ink-jet ink composition preferably has substantially the same surface tension and viscosity as those described above.

As described above, since the ink-jet ink composition according to this embodiment contains the urethane resin particles having the crosslinking group, the friction fastness of an obtained image is enhanced. Furthermore, since the ink-jet ink composition according to this embodiment contains the lubricant, which has a mean particle size D50 of 200 nm or less, discharge stability and intermittent discharge characteristics can be maintained good. Using an ink jet head including circulation paths circulating the ink composition during recording further enhances discharge stability and intermittent discharge characteristics. In accordance with the ink-jet ink composition according to this embodiment, friction fastness is compatible with discharge stability and intermittent discharge characteristics.

### 3. Recording Medium

When the ink-jet ink composition according to this embodiment is a textile printing ink-jet ink composition, fabric is used as a recording medium. Examples of material forming the fabric include, but are not limited to, natural fibers such as cotton, hemp, wool, and silk; synthetic fibers such as polypropylene, polyester, acetate, triacetate, polyamide, and polyurethane; and biodegradable fibers such as polylactic acid. The material forming the fabric may be a fiber blend of these.

The fabric may be in the form of any of a woven fabric, knitted fabric, and nonwoven fabric made from the above fibers. The area weight of the fabric, which is used in this embodiment, is not particularly limited and may be 1.0 oz to 10.0 oz. The area weight of the fabric is preferably 2.0 oz to 9.0 oz, more preferably 3.0 oz to 8.0 oz, and furthermore preferably 4.0 oz to 7.0 oz. When the area weight of the fabric is within such ranges, good recording can be performed. Furthermore, the inkjet recording method according to this embodiment is applicable to a plurality of types of fabrics different in area weight and enables good textile printing to be performed.

In this embodiment, examples of the morphology of the fabric include clothes, wears, and other accessories. The clothes include woven fabrics, knitted fabrics, and nonwoven fabrics. The wears and the other accessories include sewn T-shirts; handkerchiefs; scarves; towels; handbags; fabric bags; furniture including curtains, sheets, bedcovers, and wallpaper; and cut or uncut clothes serving as unsewn parts. These morphologies include elongated goods wound into rolls, goods cut to a predetermined size, and goods with a product shape. The fabric used may be one provided with a treatment solution in advance.

The area weight of the fabric is preferably 1.0 oz to 10.0 oz, more preferably 2.0 oz to 9.0 oz, furthermore preferably 3.0 oz to 8.0 oz, and still furthermore preferably 4.0 oz to 7.0 oz.

The fabric used is preferably a cotton fabric colored with dye in advance. Examples of dye used to color the fabric in advance include water-soluble dyes such as acidic dyes and basic dyes, disperse dyes used in combination with a dispersant, and reactive dyes. When the fabric used is a cotton fabric, a reactive dye suitable for dyeing cotton is preferably used.

In this embodiment, the fabric has preferably been treated with a treatment solution composition (hereinafter also simply referred to as the "treatment solution"). The treatment solution composition is used in such a manner that the treatment solution composition is applied to the fabric, which serves as a base material of a textile print, in advance in inkjet textile printing. The treatment solution composition contains, for example, a cationic compound, water, and the organic solvent.

The cationic compound has the function of aggregating components in the ink composition. Therefore, applying the ink solution to the fabric provided with the treatment solution allows the cationic compound to facilitate the aggregation of ink particles or increases the viscosity of the ink, thereby suppressing the absorption of the ink in spaces between fibers forming the fabric or in the fibers. In this manner, the cationic compound holds the ink on a surface of the fabric; hence, chromogenic properties of the ink in a textile print are enhanced. Furthermore, the cationic compound suppresses blurring and bleeding.

Examples of the cationic compound include polyvalent metal salts such as calcium salts and magnesium salts; cationic resins such as cationic urethanic resins, cationic olefinic resins, and cationic allylamine-type resins; cationic surfactants; inorganic acids; and organic acids. Among these, a polyvalent metal salt is preferably used from the viewpoint of enhancing chromogenic properties of pigment and the viewpoint that the polyvalent metal salt is suitable for cotton fabrics. These cationic compounds may be used alone or in combination.

The content of the cationic compound in the treatment solution is not particularly limited. The content of the cationic compound in the treatment solution is preferably 0.1% by mass or more with respect to the total mass of the treatment solution, more preferably 2.0% by mass or more, and furthermore preferably 5.0% by mass or more. The content of the cationic compound in the treatment solution is preferably 40.0% by mass or less with respect to the total mass of the treatment solution, more preferably 25.0% by mass or less, and furthermore preferably 10.0% by mass or less. Setting the content of the cationic compound to the above ranges reduces the precipitation or separation of the cationic compound in the treatment solution, facilitates the aggregation of pigment or the resin particles in the ink, and suppresses the absorption of the pigment or the resin particles in spaces between fibers forming the fabric or in the fibers. This reduces a phenomenon in which a colorant strikes in the back surface direction of a textile print surface and enhances chromogenic properties of a textile print.

In a case where the ink-jet ink composition according to this embodiment is used to make a record on a low ink-absorbing or ink non-absorbing unabsorbent recording medium, the ink-jet ink composition is preferably used together with the treatment solution as described above.

The term "ink non-absorbing or low ink-absorbing recording medium" as used herein refers to a "recording medium having a water absorption rate of 10 mL/m² or less within 30 msec^{1/2} from the start of contact as determined by the Bristow method". The Bristow method is the most popular method for measuring the amount of absorbed liquid in a short time and has been adopted by Japan Technical Association of the Pulp and Paper Industry (JAPAN TAPPI). Details of a test method are described in Standard No. 51 "Kami Oyobi Itagami - Ekitai Kyushusei Siken Houhou - Buristo Hou (Paper and paperboard - liquid absorption test method - Bristow method)" in "JAPAN TAPPI Pulp and Paper Test Methods, 2000".

Examples of the ink non-absorbing recording medium include plastic films not surface-treated for ink jet printing, that is, not provided with any ink absorption layer; those having a plastic coating on a substrate such as paper; and those having a plastic film bonded thereto. The term "plastic" as used herein includes polyvinyl chloride, polyethylene terephthalate, polycarbonate, polystyrene, polyurethane, polyethylene, and polypropylene. Examples of the low ink-absorbing recording medium include printing paper including art paper, coated paper, and matte paper.

The ink-jet ink composition according to this embodiment is good in dry friction fastness and wet friction fastness which are required for textile printing and is, therefore, preferably such a textile printing ink-jet ink composition that the fabric is used as a recording medium.

### 4. Ink Jet Recording Method

Next, the inkjet recording method according to this embodiment is described. The inkjet recording method according to this embodiment performs textile printing in such a manner that droplets of the ink composition are discharged by an ink jet process using the above-mentioned printer 1 (see FIG. 1) and are applied to the recording medium 2 such that an image or the like is formed.

In particular, in a case where the ink jet recording method according to this embodiment is applied to the fabric, the ink jet recording method according to this embodiment includes an ink-applying step of applying the ink-jet ink composition to the fabric by discharging the ink-jet ink composition from a nozzle of an ink jet head. In the ink-applying step, droplets of the ink composition discharged from the above-mentioned ink jet head 3 (see FIG. 1) are landed on at least one portion of the fabric. In this embodiment, using the ink jet process in the ink-applying step eliminates a printing plate necessary for analogue textile printing such as screen textile printing to facilitate dealing with high-mix, low-volume production and enables a high-definition image, a text, a pattern, a color, or the like to be formed.

The fabric has preferably been treated with the treatment solution. In a case where the fabric has been treated with the treatment solution, a component, such as pigment, contained in the treatment solution reacts with the cationic compound in the treatment solution and an ink component such as pigment aggregates in the vicinity of a surface of the recording medium 2. Therefore, pigment is unlikely to migrate in an inward direction of the recording medium 2 and chromogenic properties of the ink are enhanced.

A method for applying the treatment solution is not particularly limited and may be capable of applying the treatment solution to at least one region of the fabric. Examples of the method for applying the treatment solution to the fabric include immersion coating in which the fabric is immersed in the treatment solution; roller coating in which the treatment solution is applied to the fabric using a brush, a roller, a spatula, a roll coater, or the like; spray coating in which the treatment solution is sprayed with a sprayer or the like; and ink jet coating in which the treatment solution is applied by an ink jet process. In particular, immersion coating, roller coating, spray coating, or the like is preferably used because the configuration of an apparatus is simple and the application of the treatment solution can be quickly performed.

In the ink-applying step, the coating weight of the ink applied to the recording medium 2 per unit area of the recording medium 2 is preferably 1.5 mg/cm² to 6.0 mg/cm² and more preferably 2.0 mg/cm² to 5.0 mg/cm². When the coating weight of the ink is within the above ranges, chromogenic properties of an image or the like formed by textile print are enhanced. Furthermore, drying properties of the ink applied to the recording medium 2 are ensured and the occurrence of the bleeding of the image or the like is reduced. In a case where a base is formed on the fabric colored in advance using a white ink composition, the white ink composition is preferably applied to the fabric in an amount exceeding the above coating weight.

The ink jet recording method according to this embodiment may include a step of heating the ink applied to the recording medium 2 after the ink-applying step. Examples of a heating method include, but are not limited to, a heat press method, an atmospheric pressure steam method, a high-pressure steam method, and a thermofix method. A heat source for heating is not particularly limited and may be, for example, an infrared lamp or the like. The heating temperature may be the temperature at which the resin particles in the ink are fused and a medium such as water evaporates. The heating temperature is preferably, for example, about 100 °C to about 200 °C, more preferably 170 °C or lower, and furthermore preferably 150 °C or lower. Herein, the heating temperature in the heating step corresponds to the surface temperature of an image or the like formed on the recording medium 2. The heating temperature can be measured by substantially the same method as that used in the above-mentioned drying step. The heating time is not particularly limited and is, for example, 30 seconds to 20 minutes.

In this embodiment, performing recording using the printer 1, which includes the pressure chambers C and the circulation paths, which circulate the ink composition in the pressure chambers C, suppresses clogging due to aggregates of the resin particles and allows discharge stability to be good. Even though the content of a moisturizing component such as glycerin, which has a boiling point of 270 °C or higher, is reduced, discharge stability and intermittent discharge characteristics can be ensured and therefore the heating temperature can be reduced.

The ink jet recording method according to this embodiment may include a step of water-washing and drying the recording medium 2 subjected to textile printing after the heating step. In water washing, a component of the ink or the like not fixed to the recording medium 2 may be washed out using a hot soap solution as a soaping treatment as required. Through the above steps, a textile print is manufactured.

In a case where the ink jet recording method according to this embodiment is applied to an ink non-absorbing or low ink-absorbing or unabsorbent recording medium, a treatment solution-applying step is preferably performed together with the ink-applying step or before or after the ink-applying step. Treating the recording medium 2 with the treatment solution allows resin or pigment contained in the ink composition to react with the cationic compound in the treatment solution, so that an ink component aggregates in the vicinity of a surface of the recording medium 2 to enhance chromogenic properties of the ink. Furthermore, friction fastness is enhanced and rubfastness is also enhanced.

As described above, in accordance with the inkjet recording method according to this embodiment, since the ink-jet ink composition contains the urethane resin particles having the crosslinking group, the friction fastness of an obtained image is enhanced. Furthermore, since the ink-jet ink composition contains the lubricant, which has a mean particle size D50 of 200 nm or less, discharge stability and intermittent discharge characteristics can be maintained good. Using the ink jet head 3, which includes the circulation paths, which circulate the ink composition, during recording further enhances discharge stability and intermittent discharge characteristics. In accordance with the inkjet recording method according to this embodiment, friction fastness is compatible with discharge stability and intermittent discharge characteristics.

### 5. Examples

The present disclosure is further described below in detail with reference to examples and comparative examples. The present disclosure is not limited to the examples only. Incidentally, "parts" and "%" in the examples and the comparative examples are on a mass basis unless otherwise specified.

### 5.1. Preparation of Ink Compositions

Components were put in a container so as to give compositions shown in Tables 1 and 2, were mixed together for two hours using a magnetic stirrer, and were agitated, followed by sufficient mixing by dispersing in a bead mill filled with zirconia beads with a diameter of 0.3 mm. After agitation for one hour, filtration was performed using a 5 µm membrane filter made of PTFE, whereby ink compositions were obtained. Values in Tables 1 and 2 are shown in mass percent unless otherwise specified. Ion-exchanged water was added such that the total mass of each ink composition was 100% by mass. Incidentally, in Tables 1 and 2, the value of each of a pigment dispersion, a crosslinking agent, and a lubricant was shown in mass percent in terms of solid matter, which was an effective component.

**Table 1**

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Pigment (Carbon Black) | 5.0 | 5.0 | 5.0 | 5.0 | 5.0 | 5.0 | 5.0 | 5.0 | 5.0 | 5.0 |
| Crosslinking urethane resin (UW-1501F) | 7.0 | 7.0 | 7.0 | 7.0 | 7.0 | - | - | 7.0 | 7.0 | 7.0 |
| Non-crosslinking urethane resin (Takelac W-6061) | - | - | - | - | - | 7.0 | 7.0 | - | - | - |
| Lubricant (E6500: a particle size of 60 nm) | 1.0 | 1.0 | 1.0 | - | - | 1.0 | - | - | - | - |
| Lubricant (E6314: a particle size of 100 nm) | - | - | - | 1.0 | - | - | - | - | - | - |
| Lubricant (E8237: a particle size of 80 nm) | - | - | - | - | 1.0 | - | - | - | - | - |
| Lubricant (ME85250: a particle size of 400 nm) | - | - | - | - | - | - | - | 1.0 | - | - |
| Glycerin | 10.0 | 10.0 | 10.0 | 10.0 | 10.0 | 10.0 | 10.0 | 10.0 | 20.0 | 10.0 |
| Triethylene glycol | 5.0 | 5.0 | 5.0 | 5.0 | 5.0 | 5.0 | 5.0 | 5.0 | 5.0 | 5.0 |
| KOH | 0.1 | 0.1 | 0.1 | 0.1 | 0.1 | 0.1 | 0.1 | 0.1 | 0.1 | 0.1 |
| Surfactant (E1010) | 0.3 | 0.3 | 0.3 | 0.3 | 0.3 | 0.3 | 0.3 | 0.3 | 0.3 | 0.3 |
| Ion-exchanged water | Balance | Balance | Balance | Balance | Balance | Balance | Balance | Balance | Balance | Balance |
| Nozzle diameter (µm) | 24 | 20 | 30 | 24 | 24 | 24 | 24 | 24 | 24 | 24 |
| Head (circulation or non-circulation) | Non-circulation | Non-circulation | Non-circulation | Non-circulation | Non-circulation | Non-circulation | Non-circulation | Non-circulation | Non-circulation | Non-circulation |
| Dry friction fastness | B | B | B | B | B | C | D | B | D | D |
| Wet friction fastness | A | A | A | A | A | D | D | A | C | B |
| Discharge stability | A | A | B | A | B | A | B | B | D | C |
| Intermittent discharge characteristics | B | C | A | B | B | A | B | D | B | D |

**Table 2**

| | Example 6 | Example 7 | Example 8 | Example 9 | Example 10 | Example 11 | Example 12 | Example 13 | Example 14 |
|---|---|---|---|---|---|---|---|---|---|
| Pigment (Carbon Black) | 5.0 | 5.0 | 5.0 | 5.0 | 3.0 | 7.0 | 5.0 | 5.0 | 5.0 |
| Crosslinking urethane resin (UW-1501F) | 4.0 | 5.0 | 10.0 | 12.0 | 7.0 | 7.0 | 7.0 | 7.0 | 7.0 |
| Non-crosslinking urethane resin (Takelac W-6061) | | | | | | | | | |
| Lubricant (E6500: a particle size of 60 nm) | 1.0 | 1.0 | 1.0 | 1.0 | 1.0 | 1.0 | 0.5 | 2.0 | 1.0 |
| Lubricant (E6314: a particle size of 100 nm) | - | - | - | - | - | - | - | - | - |
| Lubricant (E8237: a particle size of 80 nm) | - | - | - | - | - | - | - | - | - |
| Lubricant (ME85250: a particle size of 400 nm) | - | - | - | - | - | - | - | - | - |
| Glycerin | 10.0 | 10.0 | 10.0 | 10.0 | 10.0 | 10.0 | 10.0 | 10.0 | 10.0 |
| Triethylene glycol | 5.0 | 5.0 | 5.0 | 5.0 | 5.0 | 5.0 | 5.0 | 5.0 | 5.0 |
| KOH | 0.1 | 0.1 | 0.1 | 0.1 | 0.1 | 0.1 | 0.1 | 0.1 | 0.1 |
| Surfactant (E1010) | 0.3 | 0.3 | 0.3 | 0.3 | 0.3 | 0.3 | 0.3 | 0.3 | 0.3 |
| Ion-exchanged water | Balance | Balance | Balance | Balance | Balance | Balance | Balance | Balance | Balance |
| Nozzle diameter (µm) | 24 | 24 | 24 | 24 | 24 | 24 | 24 | 24 | 24 |
| Head (circulation or non-circulation) | Non-circulation | Non-circulation | Non-circulation | Non-circulation | Non-circulation | Non-circulation | Non-circulation | Non-circulation | Circulation |
| Dry friction fastness | C | B | B | A | B | B | C | A | B |
| Wet friction fastness | C | B | A | A | A | B | B | B | A |
| Discharge stability | A | A | B | C | A | B | A | B | A |
| Intermittent discharge characteristics | A | A | B | C | A | C | A | C | A |

Among components shown in Tables 1 and 2, details of components described without using a compound name are as described below.
Pigment: Carbon Black (produced by Orient Chemical Industries Co., Ltd., trade name "BONJET BLACKCW-1", a pigment solid content of 20%)
Resin particles
   · UW-1501F: produced by Ube Industries, Ltd., trade name "ETERNACOLL UW-1501F", urethane resin particles having a crosslinking group, a glass transition temperature Tg of -30 °C, a mean particle size D50 of 40 nm.
   · Takelac^{®} W-6061: produced by Mitsui Chemicals SKC Polyurethane Co., Ltd., urethane resin having no crosslinking group, a mean particle size D50 of 100 nm.
Lubricant
   · E-6500: produced by Toho Chemical Industry Co., Ltd., polyethylene wax emulsion, trade name "Hytec E-6500", a melting point of 140 °C, a mean particle size D50 of 60 nm.
   · E-6314: produced by Toho Chemical Industry Co., Ltd., polyethylene wax emulsion, trade name "Hytec E-6314", a melting point of 137 °C, a mean particle size D50 of 100 nm.
   · E-8237: produced by Toho Chemical Industry Co., Ltd., polyethylene wax emulsion, trade name "Hytec E-8237", a melting point of 106 °C, a mean particle size D50 of 80 nm.
   · ME85250: produced by Michelman, Inc., trade name "Michem Emulsion ME85250", polyethylene wax emulsion, a mean particle size D50 of 400 nm.
Surfactant
   · E1010: produced by Nissin Chemical Industry Co., Ltd., acetylene glycol surfactant, trade name "Olfine E1010".

### 5.2. Preparation of Textile Prints

Each ink composition was filled in a single nozzle array of a head of a modification of a printer available from Seiko Epson Corporation under the trade name "SC-F2000" and was used to perform recording at a resolution of 1,440 dpi × 1,440 dpi and an application quantity of 200 mg/inch² under conditions described in Tables 1 and 2. After recording, heat treatment was performed at 165 °C for five minutes using a conveyor oven (hot-air drying method), whereby a textile print was fixed. Fabric used was white cotton broadcloth made of 100% cotton. In Tables 1 and 2, in an example of "circulation", an ink jet head has an ink circulation structure having pressure chambers and circulation paths circulating the ink composition in the pressure chambers as shown in FIGS. 2 and 3. The ink jet head used had a nozzle diameter shown in Tables 1 and 2.

### 5.3. Evaluation Tests

### 5.3.1 Evaluation of Dry Friction Fastness

The dry friction fastness of a textile print obtained in each example was evaluated in light of standards below in accordance with a dry test specified in JIS L 0849 "Test methods for colour fastness to rubbing". The drying test was performed by a crock meter method. Evaluation was performed in such a manner that the degree of staining was determined by a visual method in accordance with Item 10 (Determination of Color Fastness) of JIS L 0801 cited in JIS L 0849. For a rating of C or above, it can be said that good dry friction fastness is obtained in the present disclosure.

### Evaluation standards

A: The dry friction fastness is rated Grade 4-5 (intermediate grade) to Grade 5.
B: The dry friction fastness is rated Grade 3-4 (intermediate grade) to Grade 4.
C: The dry friction fastness is rated Grade 2-3 (intermediate grade) to Grade 3.
D: The dry friction fastness is rated Grade 2 or below.

### 5.3.2 Migration Wet Friction Fastness Test

A textile print obtained in each example was evaluated in light of standards below in accordance with a wet test specified in JIS L 0849 "Test methods for colour fastness to rubbing". The wet test was performed by a crock meter method. Evaluation was performed in such a manner that the degree of staining was determined by a visual method in accordance with Item 10 (Determination of Color Fastness) of JIS L 0801 cited in JIS L 0849. For a rating of C or above, it can be said that good wet friction fastness is obtained in the present disclosure.

### Evaluation standards

A: The dry friction fastness is rated Grade 4-5 (intermediate grade) to Grade 5.
B: The dry friction fastness is rated Grade 3-4 (intermediate grade) to Grade 4.
C: The dry friction fastness is rated Grade 2-3 (intermediate grade) to Grade 3.
D: The dry friction fastness is rated Grade 2 or below.

### 5.3.3. Evaluation of Discharge Stability

Each ink composition was continuously discharged at 14 kHz in a 20 °C, 30% RH environment using the above inkjet apparatus and an inkjet head with a nozzle diameter shown in Tables 1 and 2 under such a condition that 10 pL per droplet was discharged. An ejection state after three minutes was observed with a droplet observation system using stroboscopic lighting and a CCD camera and was evaluated in accordance with standards below. For a rating of C or above, it can be said that good discharge stability is obtained in the present disclosure.

### Evaluation standards

A: The number of clogged nozzles after three minutes is zero.
B: The number of clogged nozzles after three minutes is one.
C: The number of clogged nozzles after three minutes is two.
D: The number of clogged nozzles after three minutes is two or more and the shape of a droplet is irregular.

### 5.3.4. Evaluation of Intermittent Discharge Characteristics

Each ink composition was continuously discharged for ten seconds at 14 kHz in a 20 °C, 30% RH environment using the above ink jet apparatus and an ink jet head with a nozzle diameter shown in Tables 1 and 2 under such a condition that 10 pL per droplet was discharged. The ejection state of droplets discharged at intervals of 40 seconds was observed with a droplet observation system using stroboscopic lighting and a CCD camera and was evaluated in accordance with standards below. For a rating of C or above, it can be said that good intermittent discharge characteristics are obtained in the present disclosure.

### Evaluation standards

A: The difference in speed between droplets after an elapse of 40 seconds is less than 5%.
B: The difference in speed between droplets after an elapse of 40 seconds is less than 15%.
C: The difference in speed between droplets after an elapse of 40 seconds is 15% or more.
D: After an elapse of 40 seconds, no droplet was discharged.

### 5.4. Evaluation Results

In the comparative examples, discharge stability and intermittent discharge characteristics were not compatible with friction fastness. However, in all the examples, intermittent discharge characteristics were compatible with friction fastness. Details are described below.

As is clear from Table 1, in Examples 1 to 3, as the nozzle diameter was smaller, discharge stability was better and as the nozzle diameter is larger, intermittent discharge characteristics were more excellent. In Examples 1, 4, and 5, as the particle size of the lubricant was larger, discharge stability was lower.

In contrast to these, in Comparative Example 1, since the urethane resin particles had no crosslinking group, friction fastness was poor, though discharge stability and intermittent discharge characteristics were good. In Comparative Example 2, since no lubricant was contained, discharge stability and intermittent discharge characteristics were lower and friction fastness was poorer than those in Comparative Example 1. In Comparative Example 3, since the mean particle size of the lubricant was large, discharge stability and intermittent discharge characteristics were lower than those in Comparative Example 1. In Comparative Examples 4 and 5, no lubricant was contained; hence, Comparative Examples 4 and 5 were rated lower overall than Example 1. In particular, in Comparative Example 4, since the content of glycerin was high, friction fastness and discharge stability were particularly lower than those in Example 1. In Comparative Example 5, dry friction fastness and intermittent discharge characteristics were particularly low and wet friction fastness was, however, maintained good because the urethane resin particles having the crosslinking group were contained.

As is clear from Table 2, in Examples 6 to 9, as the content of resin was higher, friction fastness was higher and as the content of resin was lower, discharge stability and intermittent discharge characteristics were higher. In Examples 10 and 11, as the content of pigment was lower, wet friction fastness, discharge stability, and intermittent discharge characteristics were rated higher. In Examples 12 and 13, as the content of the lubricant was higher, friction fastness was rated higher and as the content of the lubricant was lower, discharge stability and intermittent discharge characteristics were rated higher. In Example 14, since a circulation head was used, intermittent discharge characteristics were rated higher than those in Example 1.

## Claims

1. An ink-jet ink composition containing:
pigment;
resin particles;
a lubricant;
water; and
an organic solvent, wherein
the resin particles are urethane resin particles having a crosslinking group and the lubricant has a mean particle size D50 of 200 nm or less.

2. The ink-jet ink composition according to claim 1, wherein the content of the resin particles is 5.0% by mass or more with respect to the total mass of the ink-jet ink composition.

3. The ink-jet ink composition according to claim 1 or claim 2, wherein the glass transition temperature of the resin particles is 0 °C or lower.

4. The ink-jet ink composition according to any one of claims 1 to 3, wherein the ratio of the mean particle size D50 of the resin particles to the mean particle size D50 of the lubricant is from 0.5 to 1.5.

5. The ink-jet ink composition according to any one of claims 1 to 4, wherein the organic solvent comprises glycerin and the content of glycerin is 15.0% by mass or less with respect to the total mass of the ink-jet ink composition.

6. The ink-jet ink composition according to any one of claims 1 to 5, wherein the melting point of the lubricant is 120 °C or higher.

7. The ink-jet ink composition according to any one of claims 1 to 6, wherein the mean particle size D50 of the urethane resin particles is 100 nm or less.

8. An ink-jet composition according to any preceding claim, wherein each molecule of the urethane resin particles having a crosslinking group preferably has three or more crosslinking groups.

9. An ink-jet composition according to any preceding claim, wherein the crosslinking group includes an isocyanate group or a silanol group, and preferably the crosslinking group used is a blocked isocyanate group.

10. An ink-jet composition according to claim 9, wherein the blocked isocyanate contains a latent isocyanate group formed by blocking an isocyanate group with a blocking agent, and preferably the isocyanate group is a polyisocyanate compound.

11. The ink-jet ink composition according to any one of claims 1 to 10 being discharged from a nozzle with a nozzle (N) diameter of 20 µm to 30 µm.

12. The ink-jet ink composition according to claim 11 being used in an ink jet recording apparatus (1) including an ink jet head (3) including the nozzle (N), a pressure chamber (C), and a circulation path circulating the ink-jet ink composition in the pressure chamber.

13. The ink-jet ink composition according to any one of claims 1 to 12, wherein a recording medium is fabric.

14. An inkjet recording method comprising an ink-applying step of applying an inkjet ink composition to a recording medium (2) by discharging the ink-jet ink composition from a nozzle (N) of an ink jet head (3), wherein
the ink-jet ink composition contains pigment, resin particles, a lubricant, water, and an organic solvent; the resin particles are urethane resin particles having a crosslinking group; and the lubricant has a mean particle size D50 of 200 nm or less.

15. The ink jet recording method according to claim 14, wherein the ink jet head (3) includes a pressure chamber (C) and a circulation path circulating the ink-jet ink composition in the pressure chamber.

## Patentansprüche

1. Tintenstrahltintenzusammensetzung, beinhaltend:
Pigment;
Harzpartikel;
ein Schmiermittel;
Wasser; und
ein organisches Lösemittel, wobei
die Harzpartikel Urethanharzpartikel mit einer Vernetzungsgruppe sind und das Schmiermittel eine mittlere Partikelgröße D50 von 200 nm oder weniger aufweist.

2. Tintenstrahltintenzusammensetzung nach Anspruch 1, wobei der Gehalt der Harzpartikel 5,0 Massel oder mehr in Bezug auf die Gesamtmasse der Tintenstrahltintenzusammensetzung ist.

3. Tintenstrahltintenzusammensetzung nach Anspruch 1 oder Anspruch 2, wobei die Glasübergangstemperatur der Harzpartikel 0°C oder niedriger ist.

4. Tintenstrahltintenzusammensetzung nach einem der Ansprüche 1 bis 3, wobei das Verhältnis der mittleren Partikelgröße D50 der Harzpartikel zu der mittleren Partikelgröße D50 des Schmiermittels 0,5 bis 1,5 ist.

5. Tintenstrahltintenzusammensetzung nach einem der Ansprüche 1 bis 4, wobei das organische Lösemittel Glycerin umfasst und der Gehalt von Glycerin 15,0 Massel oder weniger in Bezug auf die Gesamtmasse der Tintenstrahltintenzusammensetzung ist.

6. Tintenstrahltintenzusammensetzung nach einem der Ansprüche 1 bis 5, wobei der Schmelzpunkt des Schmiermittels 120°C oder höher ist.

7. Tintenstrahltintenzusammensetzung nach einem der Ansprüche 1 bis 6, wobei die mittlere Partikelgröße D50 der Urethanharzpartikel 100 nm oder weniger ist.

8. Tintenstrahltintenzusammensetzung nach einem vorstehenden Anspruch, wobei jedes Molekül der Urethanharzpartikel mit einer Vernetzungsgruppe vorzugsweise drei oder mehr Vernetzungsgruppen aufweist.

9. Tintenstrahltintenzusammensetzung nach einem vorstehenden Anspruch, wobei die Vernetzungsgruppe eine Isocyanatgruppe oder eine Silanolgruppe enthält und vorzugsweise die Vernetzungsgruppe eine blockierte Isocyanatgruppe ist.

10. Tintenstrahltintenzusammensetzung nach Anspruch 9, wobei das blockierte Isocyanat eine latente Isocyanatgruppe beinhaltet, die durch Blockieren einer Isocyanatgruppe mit einem Blockierungsmittel blockiert wird, und vorzugsweise die Isocyanatgruppe eine Polyisocyanatverbindung ist.

11. Tintenstrahltintenzusammensetzung nach einem der Ansprüche 1 bis 10, die aus einer Düse mit einem Düsen-(N) Durchmesser von 20 µm bis 30 µm ausgestoßen wird.

12. Tintenstrahltintenzusammensetzung nach Anspruch 11, die in einer Tintenstrahlaufzeichnungsvorrichtung (1) verwendet wird, die einen Tintenstrahlkopf (3) enthält, der die Düse (N), eine Druckkammer (C) und einen Zirkulationspfad, der die Tintenstrahltintenzusammensetzung in der Druckkammer zirkuliert, enthält.

13. Tintenstrahltintenzusammensetzung nach einem der Ansprüche 1 bis 12, wobei ein Aufzeichnungsmedium ein Stoff ist.

14. Tintenstrahlaufzeichnungsverfahren, das einen Tintenauftragungsschritt zum Auftragen einer Tintenstrahltintenzusammensetzung auf ein Aufzeichnungsmedium (2) durch Ausstoßen der Tintenstrahltintenzusammensetzung aus einer Düse (N) eines Tintenstrahlkopfs (3) umfasst, wobei
die Tintenstrahltintenzusammensetzung Pigment, Harzpartikel, ein Schmiermittel, Wasser und ein organisches Lösemittel beinhaltet; die Harzpartikel Urethanharzpartikel mit einer Vernetzungsgruppe sind und das Schmiermittel eine mittlere Partikelgröße D50 von 200 nm oder weniger aufweist.

15. Tintenstrahlaufzeichnungsverfahren nach Anspruch 14, wobei der Tintenstrahlkopf (3) eine Druckkammer (C) und einen Zirkulationspfad, der die Tintenstrahltintenzusammensetzung in der Druckkammer zirkuliert, enthält.

## Revendications

1. Composition d'encre à jet d'encre contenant :
un pigment ;
des particules de résine ;
un lubrifiant ;
de l'eau ; et
un solvant organique, dans laquelle
les particules de résine sont des particules de résine d'uréthane comportant un groupe de réticulation et le lubrifiant présente une taille de particules moyenne D50 de 200 nm ou moins.

2. Composition d'encre à jet d'encre selon la revendication 1, dans laquelle la teneur en particules de résine est de 5,0% en masse ou plus par rapport à la masse totale de la composition d'encre à jet d'encre.

3. Composition d'encre à jet d'encre selon la revendication 1 ou la revendication 2, dans laquelle la température de transition du verre des particules de résine est de 0°C ou moins.

4. Composition d'encre à jet d'encre selon l'une quelconque des revendications 1 à 3, dans laquelle le rapport entre la taille de particules moyenne D50 des particules de résine et la taille de particules moyenne D50 du lubrifiant est compris entre 0,5 et 1,5.

5. Composition d'encre à jet d'encre selon l'une quelconque des revendications 1 à 4, dans laquelle le solvant organique comprend de la glycérine et la teneur en glycérine est de 15,0% en masse ou moins par rapport à la masse totale de la composition d'encre à jet d'encre.

6. Composition d'encre à jet d'encre selon l'une quelconque des revendications 1 à 5, dans laquelle le point de fusion du lubrifiant est de 120°C ou plus.

7. Composition d'encre à jet d'encre selon l'une quelconque des revendications 1 à 6, dans laquelle la taille de particules moyenne D50 des particules de résine d'uréthane est de 100 nm ou moins.

8. Composition d'encre à jet d'encre selon l'une quelconque des revendications précédentes, dans laquelle chaque molécule des particules de résine d'uréthane comportant un groupe de réticulation comporte de préférence trois groupes de réticulation ou plus.

9. Composition d'encre à jet d'encre selon l'une quelconque des revendications précédentes, dans laquelle le groupe de réticulation inclut un groupe isocyanate ou un groupe de silanol, et le groupe de réticulation utilisé est de préférence un groupe isocyanate bloqué.

10. Composition d'encre à jet d'encre selon la revendication 9, dans laquelle l'isocyanate bloqué contient un groupe isocyanate latent formé par blocage d'un groupe isocyanate avec un agent de blocage, et le groupe isocyanate est de préférence un composé polyisocyanate.

11. Composition d'encre à jet d'encre selon l'une quelconque des revendications 1 à 10, laquelle est éjectée à partir d'une buse présentant un diamètre de buse (N) de 20 µm à 30 µm.

12. Composition d'encre à jet d'encre selon la revendication 11, laquelle est utilisée dans un appareil d'impression à jet d'encre (1) incluant une tête à jet d'encre (3) incluant la buse (N), une chambre de pression (C), et un trajet de circulation permettant à la composition d'encre à jet d'encre de circuler dans la chambre de pression.

13. Composition d'encre à jet d'encre selon l'une quelconque des revendications 1 à 12, dans laquelle un support d'impression est constitué de tissu.

14. Procédé d'impression à jet d'encre comprenant une étape d'application d'encre consistant à appliquer une composition d'encre à jet d'encre sur un support d'impression (2) en éjectant la composition d'encre à jet d'encre à partir d'une buse (N) d'une tête à jet d'encre (3), dans lequel
la composition d'encre à jet d'encre contient un pigment, des particules de résine, un lubrifiant, de l'eau, et un solvant organique ; les particules de résine sont des particules de résine d'uréthane comportant un groupe de réticulation ; et le lubrifiant présente une taille de particules moyenne D50 de 200 nm ou moins.

15. Procédé d'impression à jet d'encre selon la revendication 14, dans lequel la tête à jet d'encre (3) inclut une chambre de pression (C) et un trajet de circulation permettant à la composition d'encre à jet d'encre de circuler dans la chambre de pression.
